(19) Europäisches Patentamt
European Patent Office
Office européen des brevets

(11) **EP 4 196 856 B1**

(12) **EUROPÄISCHE PATENTSCHRIFT**

(45) Veröffentlichungstag und Bekanntmachung des Hinweises auf die Patenterteilung:
**24.06.2026   Patentblatt 2026/26**

(21) Anmeldenummer: **21755931.9**

(22) Anmeldetag: **02.08.2021**

(51) Internationale Patentklassifikation (IPC):
*G05B 19/4099* (2006.01)        *B22F 10/366* (2021.01)
*B33Y 10/00* (2015.01)          *B29C 64/153* (2017.01)
*B33Y 50/02* (2015.01)          *B33Y 30/00* (2015.01)
*B29C 64/386* (2017.01)         *B22F 10/28* (2021.01)
*B22F 10/38* (2021.01)          *B22F 10/36* (2021.01)

(52) Gemeinsame Patentklassifikation (CPC):
**B22F 10/366; B22F 10/28; B22F 10/36; B22F 10/38; B29C 64/153; B29C 64/386; B33Y 10/00; B33Y 30/00; B33Y 50/02; G05B 19/4099;** Y02P 10/25

(86) Internationale Anmeldenummer:
**PCT/EP2021/071589**

(87) Internationale Veröffentlichungsnummer:
**WO 2022/033913 (17.02.2022 Gazette 2022/07)**

(54) **VERFAHREN UND VORRICHTUNG ZUR GENERIERUNG VON STEUERDATEN FÜR EINE VORRICHTUNG ZUR ADDITIVEN FERTIGUNG**

METHOD AND DEVICE FOR GENERATING CONTROL DATA FOR AN ADDITIVE MANUFACTURING DEVICE

PROCÉDÉ ET DISPOSITIF DE GÉNÉRATION DE DONNÉES DE COMMANDE POUR UN DISPOSITIF DE FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2020   DE 102020121144**

(43) Veröffentlichungstag der Anmeldung:
**21.06.2023   Patentblatt 2023/25**

(73) Patentinhaber: **EOS GmbH Electro Optical Systems**
**82152 Krailling (DE)**

(72) Erfinder: **HOLFELDER-SCHWALME, Peter**
 **93342 Saal an der Donau (DE)**

(74) Vertreter: **Beckord & Niedlich Patentanwälte PartG mbB**
**Marktplatz 17**
**83607 Holzkirchen (DE)**

(56) Entgegenhaltungen:
**EP-A1- 3 482 853     US-A- 5 182 055**

**Beschreibung**

Die Erfindung betrifft ein Verfahren zur Generierung von Steuerdaten für eine Vorrichtung zur additiven Fertigung eines Bauteils in einem Fertigungsprozess, in welchem in einem Baufeld Aufbaumaterial, vorzugsweise umfassend ein Metallpulver, schichtweise aufgebaut wird und jeweils zwischen dem Aufbringen zweier Materialschichten von Aufbaumaterial eine selektive Verfestigung von Aufbaumaterial dadurch erfolgt, dass eine Bestrahlung des Aufbaumaterials mit zumindest einem Energiestrahl erfolgt. Weiterhin betrifft die Erfindung ein Verfahren zur additiven Fertigung eines Bauteils, wobei in einem Baufeld Aufbaumaterial schichtweise aufgebaut wird und jeweils zwischen dem Aufbringen zweier Materialschichten eine selektive Verfestigung von Aufbaumaterial durch eine Bestrahlung des Aufbaumaterials mit zumindest einem Energiestrahl erfolgt. Außerdem betrifft die Erfindung eine entsprechende Steuerdatenerzeugungsvorrichtung zur Generierung von Steuerdaten, eine Steuereinrichtung für eine Vorrichtung zur additiven Fertigung sowie eine entsprechende Vorrichtung zur additiven Fertigung eines Bauteils, welche mit einer solchen Steuereinrichtung ausgestattet ist.

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen in der Regel auf Basis von digitalen 3D-Konstruktionsdaten durch das Ablagern von Material (dem "Aufbaumaterial") ein Fertigungsprodukt (im Folgenden auch "Bauteil" genannt) aufgebaut wird. Der Aufbau erfolgt dabei meist, aber nicht zwingend, schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping", die Herstellung von Werkzeugen als "Rapid Tooling" und die flexible Herstellung von Serienbauteilen wird als "Rapid Manufacturing" bezeichnet. Wie eingangs erwähnt, ist ein Kernpunkt die selektive Verfestigung des Aufbaumaterials, wobei diese Verfestigung bei vielen Fertigungsprozessen mit Hilfe einer Bestrahlung mit Strahlungsenergie, z. B. elektromagnetischer Strahlung, insbesondere Licht- und/oder Wärmestrahlung, aber ggf. auch mit Teilchenstrahlung wie z. B. Elektronenstrahlung erfolgen kann. Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials übereinander aufgebracht und in jeder Schicht wird das Aufbaumaterial durch räumlich begrenztes Bestrahlen der Stellen, die nach der Fertigung zum herzustellenden Bauteil gehören sollen, in einem "Schweißprozess" selektiv verfestigt, indem die Pulverkörner des Aufbaumaterials mit Hilfe der durch die Strahlung an dieser Stelle lokal eingebrachten Energie teilweise oder vollständig aufgeschmolzen werden. Nach einer Abkühlung sind diese Pulverkörner dann miteinander zu einem Festkörper verfestigt. Meist wird dabei der Energiestrahl entlang von Verfestigungsbahnen über das Baufeld geführt und das Umschmelzen bzw. Verfestigen des Materials in der jeweiligen Schicht erfolgt entsprechend in Form von "Schweißbahnen" oder "Schweißraupen", so dass letztlich im Bauteil eine Vielzahl solcher aus Schweißbahnen gebildeter Schichten vorliegt.

Auf diese Weise können inzwischen Bauteile mit sehr hoher Qualität und Bruchfestigkeit hergestellt werden. Dennoch kann es natürlich auch, je nach Material, Aufbaumethode und Belastungen des Bauteils - wie bei jedem Bauteil - zu Brüchen kommen.

US 5182055 A beschreibt eine Methode zur stereolithografischen Herstellung eines Objekts durch Abwechseln einer Reihenfolge, in der ähnliche Vektorsätze über zwei oder mehr Schichten hinweg belichtet werden. Bei einer anderen Methode wird ein Muster aus dicht gepackten sechseckigen Kacheln gezeichnet. Jede Kachel wird von den benachbarten Kacheln isoliert, indem Unterbrechungen aus nicht freiliegendem Material zwischen den Kacheln angegeben werden. Mithilfe einer unterbrochenen Scanmethode werden Vektoren mit periodischen Unterbrechungen entlang ihrer Länge gezeichnet. Bei einer anderen Methode werden Modulator- und Scantechniken eingesetzt, um Belichtungsprobleme zu verringern, die mit der Beschleunigung und Verzögerung des Scansystems beim Springen zwischen Vektoren oder beim Ändern der Scanrichtung verbunden sind.

EP 3482853 A1 betrifft ein additives Fertigungsverfahren, bei dem Schichten aus unverfestigtem Material gebildet werden, um ein Materialbett zu bilden, und die Schichten mindestens einem Energiestrahl ausgesetzt werden, um das Material zu verfestigen und ein Objekt zu bilden. Eine Vielzahl von Bereichen einer Schicht werden verfestigt, um gemeinsam einen verfestigten Abschnitt innerhalb der Schicht zu bilden, und nicht verfestigtes Material jedes Bereichs wird gemeinsam mit nicht verfestigtem Material von mindestens einer anderen Schicht verfestigt, wobei unterschiedliche Bereiche gemeinsam mit unterschiedlichen anderen Schichten verfestigt werden.

Es ist eine Aufgabe der vorliegenden Erfindung, Verfahren zur Generierung von Steuerdaten bzw. zur additiven Fertigung eines Bauteils sowie geeignete Vorrichtungen hierfür anzugeben, um Bauteile mit erhöhter Bruchfestigkeit herstellen zu können, vorzugsweise in einem selektiven Lasersinterprozess, wie er eingangs genannt wurde.

Diese Aufgabe wird durch ein Verfahren zur Generierung von Steuerdaten gemäß Patentanspruch 1, ein Verfahren zur additiven Fertigung eines Bauteils gemäß Patentanspruch 11, eine Steuerdatenerzeugungsvorrichtung gemäß Patentanspruch 12, eine Steuereinrichtung für eine Vorrichtung zur additiven Fertigung eines Bauteils gemäß Patentanspruch 13 und eine Vorrichtung zur additiven Fertigung von Bauteilen (im Folgenden auch kurz "Fertigungsvorrichtung" genannt) gemäß Patentanspruch 14 gelöst.

Bei dem erfindungsgemäßen Verfahren zur Generierung von Steuerdaten werden, wie eingangs bereits erwähnt, für eine Vorrichtung zur additiven Fertigung eines Bauteils in einem Fertigungsprozess Steuerdaten generiert. In diesem Fertigungsprozess wird in einem Baufeld Aufbaumaterial schichtweise, d. h. nacheinander in mehreren Materialauftragsebenen bzw. Materialschichten, aufgebaut. Bei dem Aufbaumaterial handelt es sich bevorzugt um ein Metallpulver. Die Erfindung ist aber nicht hierauf beschränkt, sondern kann auch mit anderen, vorzugsweise pulverförmigen, Aufbaumaterialien eingesetzt werden, wie z. B. Kunststoffen oder Keramik oder Mischungen der verschiedenen Materialien. Dabei wird jeweils zwischen dem Aufbringen zweier Materialschichten Aufbaumaterial selektiv verfestigt, indem eine Bestrahlung des Aufbaumaterials mit zumindest einem von einer Bestrahlungseinheit der Fertigungsvorrichtung erzeugten Energiestrahl erfolgt. Dabei wird nicht nur das Aufbaumaterial in der obersten, frisch aufgebrachten Materialschicht von dem Energiestrahl erfasst und auf- bzw. umgeschmolzen, sondern der Energiestrahl geht üblicherweise ein Stück tiefer in das Materialbett hinein und erreicht, wie später noch erläutert wird, auch darunterliegendes bereits umgeschmolzenes Material aus zuvor aufgetragenen Materialschichten.

Die Steuerdaten werden dabei derart erstellt, dass die Fertigungsvorrichtung so angesteuert wird, dass der Energiestrahl bzw. eine Auftrefffläche des Energiestrahls, wie eingangs erwähnt, entlang einer Anzahl von Verfestigungsbahnen über das Baufeld bewegt wird. Unter einem "Bewegen" kann hierbei das übliche Ablenken des Energiestrahlbündels, z. B. durch Galvanometerspiegel, zu verstehen sein, aber auch ein Verfahren der kompletten Strahlabgabeeinheit, z. B. in Form einer Diodenbank, insbesondere Laserdiodenbank, oder durch eine bewegte Strahlformung der Bestrahlungseinheit. Durch die mit dem Energiestrahl eingebrachte Energie wird entlang dieser Verfestigungsbahnen jeweils in einem Bereich in der Auftrefffläche und um die Auftrefffläche des Energiestrahls auf dem Baufeld Aufbaumaterial umgeschmolzen, da hier jeweils der Gesamtenergieeintrag hoch genug ist. Der Energiestrahl kann dabei über den Querschnitt des Bauteils in der jeweiligen Schicht entlang einer einzigen zusammenhängenden Verfestigungsbahn (Scanspur) verfahren werden. Üblicherweise werden von dem Energiestrahl aber kurze nebeneinander verlaufende Verfestigungsbahnen abgefahren, z. B. sogenannte Hatches, die quer zu einem Bestrahlungsstreifen oder in einem Bestrahlungsfeld (beispielsweise ein Feld in einem Schachbrettmuster) verlaufen, d. h. die gesamte zu verfestigende Fläche wird virtuell in Bestrahlungsstreifen oder Bestrahlungsfelder aufgeteilt, die sich wiederum aus den Hatches zusammensetzen, die dann vom Energiestrahl nach einer vorgegeben Scanstrategie abgefahren werden.

Dabei erfolgt der Fertigungsbetrieb (also der Betrieb der Fertigungsvorrichtung, insbesondere des Energiestrahls) zumindest zeitweise in einem erfindungsgemäßen "Verzahnungsmodus". "Zumindest zeitweise" heißt, dass der Verzahnungsmodus unter Umständen nur in bestimmten Abschnitten/Segmenten des Bauteils, z. B. im Inneren des Bauteils, angewendet wird. Grundsätzlich könnte der Verzahnungsmodus aber auch während des kompletten Produktionsprozesses genutzt werden. Dieser Verzahnungsmodus ist derart ausgestaltet, dass bei der Bewegung des Energiestrahls über das Baufeld an mehreren Umschaltpunkten eine ortsabhängige Soll-Einschweißtiefe des Energiestrahls bewusst umgeschaltet wird.

Wie oben erwähnt, wird ja nicht nur das in der obersten, frisch aufgebrachten Materialschicht von dem Energiestrahl erfasste Aufbaumaterial auf- bzw. umgeschmolzen, sondern der Energiestrahl durchdringt das Materialbett und erreicht auch darunterliegendes Material aus zuvor aufgetragenen Materialschichten. Die Tiefe der Schweißnaht, welche nach der Verfestigung der Schicht von der neu geschaffenen Oberfläche (d.h. der im Pulverbettverfahren in z-Richtung nach oben weisenden verfestigten Querschnittoberfläche des Bauteils; diese Oberfläche unterscheidet sich also von der Arbeitsebene bzw. Beschichterebene dadurch, dass die Arbeitsebene um eine aktuell unverfestigte Pulverschicht höher liegt als die verfestigte Querschnittoberfläche des Bauteils) aus gemessen wird, wird als "Einschweißtiefe" oder "Verfestigungsspurtiefe" bezeichnet. Diese "Einschweißtiefe" oder "Verfestigungsspurtiefe" schwankt prozessbedingt, aber unbeabsichtigt mit der Zeit etwas, was später noch genauer erläutert wird. Die gewünschte mittlere Tiefe der Wirkung des Energiestrahls, die am jeweiligen Ort (x, y) in der Bauebene vorgesehen ist, wird im Rahmen der Erfindung als "Soll-Einschweißtiefe" (synonym zu "mittlere Soll-Einschweißtiefe") bezeichnet. Dies ist die Einschweißtiefe bzw. Tiefeneinstellung, auf die die Steuerung der Fertigungsvorrichtung eigentlich abzielt und um die herum die tatsächliche (Ist-)Einschweißtiefe etwas schwankt.

Es wird an dieser Stelle daraufhin hingewiesen, dass bei Verwendung eines Laserstrahls als Energiestrahl im Rahmen des erfindungsgemäßen Verfahrens bevorzugt ein Dauerstrichlaser (cw) verwendet wird. Grundsätzlich könnte aber auch ein Pulslaser bzw. ein gepulst modulierter Laser (Modulation kann z. B. mit einem EOM oder AOM erfolgen) verwendet werden. Auch bei Verwendung eines gepulsten bzw. gepulst modulierten Lasers wird dessen Auftrefffläche im Sinne der Erfindung entlang der Verfestigungsbahn bewegt, auch wenn kurzzeitig im Rahmen des Pulsierens die Strahlungsleistung unterbrochen ist. Die Pulsfrequenz ist dabei auch in der Regel so hoch gewählt, dass die Einschweißtiefe hierbei nicht wesentlich beeinflusst wird, d.h. sich immer noch eine kontinuierliche Schweißraupe mit im Rahmen der üblichen Prozessschwankungen konstanter Einschweißtiefe ausbildet.

Die Soll-Einschweißtiefe kann als ortsabhängig bezeichnet bzw. angesehen werden, da in Abhängigkeit vom Ort im Bauteil bzw. entlang einer Verfestigungsbahn unterschiedliche Soll-Einschweißtiefen vorgegeben werden können. Diese Vorgehensweise kann bei einer Bearbeitung im sogenannten "Downskin-Modus" benötigt werden, also insbesondere bei der Bearbeitung im Überhang. Beispielsweise kann es im "Downskin-Modus" sinnvoll sein, die Soll-Einschweißtiefe zunächst nur auf eine oder zwei Schichten anstatt mindestens zwei bis drei Schichten festzulegen, um nicht den Überhang nach unten zu durchdringen. Des Weiteren kann z. B. bei einer Hatch-Strategie, wie sie oben bereits erwähnt wurde, in die einzelnen Hatches jeweils mit Anlauframpen hinein bzw. mit Auslauframpen herausgefahren werden (sogenanntes "Fade-in" und "Fade-out"). D. h. die Soll-Einschweißtiefe wird am Anfang eines Hatches zunächst (relativ langsam) kontinuierlich erhöht und am Ende beim Herausfahren entsprechend langsam verringert. Diese Rampen sind ein mögliches Mittel zur Verringerung eines Materialauswurfs (im selektiven Laserschmelzen von Metall "Spratzer" genannt) am Anfang eines Hatches und ein Mittel zur Reduktion von Porosität, die beispielsweise am Ende eines Hatches auftreten kann.

Im Rahmen der Erfindung, d. h. im Rahmen des erfindungsgemäß genutzten Verzahnungsmodus, wird nun diese Soll-Einschweißtiefe (bzw. "mittlere" Wirkungstiefe) des Energiestrahls an den besagten Umschaltpunkten jeweils gezielt bzw. bewusst aktiv umgeschaltet, d. h. neu vorgegeben. Das Umschalten bzw. die neue Einstellung der Soll-Einschweißtiefe erfolgt dabei vorzugsweise relativ abrupt im Rahmen eines stabilen Prozessfensters, besonders bevorzugt nur über einen oder wenige (z. B. zwei bis drei) "Mikrovektoren" hinweg. Bei den Mikrovektoren handelt es sich um kleinste mögliche Schaltschritte des Steuergeräts für die Bestrahlungskomponenten bzw. die Bestrahlungseinheit, die z. B. bei $10\mu s$, $50\mu s$ oder $100\mu s$ (Taktfrequenz) liegen können. Im Gegensatz dazu verlaufen beispielsweise die bereits oben erwähnten Fade-in- und Fade-Out-Prozesse in einem Hatch langsamer bzw. kontinuierlich rampenartig über eine längere Strecke hinweg, da dort eine Leistung des Energiestrahls über viele Mikrovektoren, z. B. 5, 10, 50, oder 100 Mikrovektoren, nach und nach gesteigert wird. Ebenso verhält sich auch das bereits erwähnte unbeabsichtigtes Schwanken der Verfestigungsspurtiefe erheblich langsamer als das erwähnte bewusste Umschalten der Soll-Einschweißtiefe. Weiterhin erstreckt sich das bewusste Umschalten der Soll-Einschweißtiefe im Rahmen des Verzahnungsmodus, wie später noch erläutert wird, bevorzugt über mehrere Materialschichten, d. h. auch die "Amplitude" der bewusst erzeugten Einschweißtiefenänderung ist stärker als die unbeabsichtigten "natürlichen" Schwankungen.

Erfindungsgemäß sind die Umschaltpunkte bei dem erfindungsgemäßen Verzahnungsmodus unter Nutzung einer vorgegebenen Wahrscheinlichkeitsverteilung (bzw. einer Zufallsverteilung für einen Punktprozess) über zumindest einen definierten Bereich eines Querschnitts des Bauteils in der jeweiligen Schicht auf dem Baufeld zufällig bzw. statistisch verteilt. Ganz besonders wird hierbei eine Poisson-Verteilung genutzt. Die zufällige bzw. statistische Verteilung kann unter Nutzung eines bewusst hierfür extra erzeugten Zufallswerts erfolgen, welcher gemäß der gewünschten Verteilung erzeugt werden kann. Unter "zufällig" ist in diesem Zusammenhang nicht nur echt zufällig, sondern auch "quasi-zufällig" bzw. "pseudo-zufällig" zu verstehen, sofern die gewünschte Verteilung ausreichend gut damit abgebildet werden kann, d. h. der Zufallswert kann eine echte Zufallszahl oder Pseudo-Zufallszahl sein.

Die auf diese Weise generierten Steuerdaten werden dann zur Ansteuerung der Fertigungsvorrichtung genutzt, damit dann die Verfestigung des Aufbaumaterials erfolgt. Mit Hilfe des erfindungsgemäßen Verfahrens ist es dabei möglich, den Fertigungsprozess, insbesondere einen selektiven Lasersinterprozess, so zu steuern, dass die eingangs genannten Probleme, insbesondere das Auftreten von Ermüdungsbrüchen, reduziert oder bei manchen Belastungen sogar ganz vermieden werden kann.

Der erfindungsgemäßen Vorgehensweise liegt die Beobachtung anhand von aufwändigen Untersuchungen zugrunde, dass additiv hergestellte Bauteile, wenn sie brechen, dann vermutlich bevorzugt an den Schweißnähten zwischen den Schichten brechen. Geht man in guter Näherung davon aus, dass bei einer bisher üblichen Fertigung die Schweißnähte zwischen den Schweißraupen zweier übereinander angeordneter Schichten in etwa in einer Ebene liegen, so kann sich ein einmal entstehender Riss entlang dieser Ebene leichter fortpflanzen, was dann zu einem Bruch des Bauteils führen kann.

Durch die im Verzahnungsmodus zufallsgesteuerte Variation der Schweißnähte - d. h. insbesondere die relativ schnellen, signifikanten "Sprünge" - in Tiefenrichtung wird nun vorteilhaft erreicht, dass ein beispielsweise durch Überlastung oder Alterung des Materials auftretender Riss im Verlauf seiner Ausbreitung auf ein "Hindernis" trifft und an dieser Stelle einen Umweg nehmen muss. Dadurch dissipiert beim Ausbreitungsprozess Energie und wird abgebremst. Zudem wird durch diese Umleitung die Rissspitze aus dem sich öffnenden Spannungszustand gedreht und die rissöffnende Kraftkomponente nimmt ab. Anders ausgedrückt "läuft sich der Riss schnell tot", so dass eine Rissausbreitung in ein- und derselben Schicht verhindert wird. D. h. durch eine mehrfache Änderung der ortsabhängigen Soll-Einschweißtiefe und damit der mittleren Wirkungstiefe des Energiestrahls während des Wegs des Energiestrahls entlang der Verfestigungsbahn unter Erzeugung eines Zufallsmusters gemäß der vorgegebenen Wahrscheinlichkeitsverteilung bzw. Wahrscheinlichkeitsfunktion wird im "Verzahnungsmodus" erreicht, dass die "Grenzflächen" zwischen den "Schichten" im Inneren besser "verzahnt" sind und so die Rissausbreitung unterdrücken oder sogar ganz stoppen können.

Es wird noch einmal darauf hingewiesen, dass dieser Verzahnungsmodus im gesamten Bauteil genutzt werden kann, aber nicht zwingend genutzt werden muss. Wie später noch ausführlicher erläutert wird, kann es zum Beispiel sinnvoll sein, einzelne Bereiche bzw. Segmente von der Verzahnung auszunehmen oder dort die Zahl der Umschaltpunkte zu reduzieren. An Stelle eines homogenen Punktprozesses bzw. einer homogenen Wahrscheinlichkeitsverteilung kann z. B. auch ein inhomogener Punktprozess bzw. eine inhomogene Wahrscheinlichkeitsverteilung verwendet werden. Z. B. kann die Dichte bzw. die Intensität der Umschaltpunkte eine Funktion des Abstands zum nächsten Bauteilrand sein, wie später noch ausführlicher erläutert wird.

Die Festlegung der Umschaltpunkte kann prinzipiell online, d. h. direkt während des eigentlichen Bearbeitungsvorgangs, also in Echtzeit oder in nahezu Echtzeit, erfolgen. Dabei können z. B. gewisse Vor-Steuerdaten genutzt werden, die eine "normalerweise" (ohne die Erfindung) für den jeweiligen Ort entlang einer Verfestigungsbahn vorgesehene (ortsabhängige) Soll-Einschweißtiefe vorgeben, die dann später in dem Online-Steuerdatenstrom verarbeitet werden, wobei die gewünschten Umschaltpunkte bzw. "Sprünge" in Tiefenrichtung eingebaut werden. Dazu können z. B. einfach die Mikrovektoren mit den Steuerdaten für die eigentlich am jeweiligen Ort vorgesehene erste Soll-Einschweißtiefe durch Mikrovektoren mit den Steuerdaten für eine geeignete zweite Soll-Einschweißtiefe ersetzt werden. Durch die Wahrscheinlichkeitsverteilung können dabei z. B. Zeitabstände festgelegt werden, nach denen jeweils eine Umschaltung auf eine geänderte Soll-Einschweißtiefe durchgeführt wird.

Die Festlegung der Umschaltpunkte kann aber auch offline bzw. vorab, d. h. vor dem eigentlichen Bearbeitungsvorgang erfolgen, d. h. der Prozess der Erzeugung des Zufallsmusters der Umschaltpunkte kann also grundsätzlich auch vor den Bauprozess verlagert werden. Dabei kann dann eine Art "Umschaltkarte" oder "Schweißtiefenkarte" erzeugt werden, auf der die Positionen der Umschaltpunkte und damit auch die räumlichen Abstände zwischen den Umschaltpunkten definiert werden. In dieser Umschaltkarte können die Umschaltpunkte in der Fläche statistisch angeordnet werden. Diese Umschaltkarte kann dann später als Vorgabe genutzt werden, wenn der Energiestrahl zur Bearbeitung des Bauteils seine Verfestigungsbahn abfährt, d. h. die Steuerdaten können eine solche "Schweißtiefenkarte" umfassen, wie später noch genauer erläutert wird.

Bei einem erfindungsgemäßen Verfahren zur Steuerung einer Fertigungsvorrichtung zur additiven Fertigung eines Bauteils werden zunächst Steuerdaten auf die erfindungsgemäße Weise generiert und diese dann genutzt, um die Vorrichtung mit den Steuerdaten zu steuern. Dabei können wie erwähnt die Steuerdaten vorab generiert werden und als komplettes Paket bzw. eine Art "Steuerprotokoll" an die Vorrichtung übermittelt werden, die dann den Produktionsprozess durchführt. Prinzipiell wäre es aber auch möglich, Steuerdaten während des bereits laufenden Prozesses für nachfolgende Prozessschritte zu ermitteln, beispielsweise während eine Schicht verfestigt wird, die Steuerdaten für die nächste Schicht zu ermitteln und bei der Verfestigung der weiteren Schicht zu nutzen.

Ausgangsbasis für die Steuerdaten sind dabei u. a. Daten, die angeben, an welchen Stellen innerhalb des Prozessraumes bzw. des Baufelds Material verfestigt werden soll, d. h. welche Teile später zum Bauteil oder zu eventuellen Stützstrukturen oder dergleichen gehören sollen und welche Bereiche nicht. Diese Daten können beispielsweise einem digitalen 3D-Modell des zu fertigenden Objekts und/oder der Stützstrukturen entnommen werden. Sind diese Daten und weitere benötigte Informationen vorhanden, wie beispielsweise welches Material verwendet wird, welche Verfestigungsvorrichtung, insbesondere welche Art von Energiestrahl, zur Verfügung steht bzw. im Rahmen welcher Parameter dieser einstellbar ist etc., so lassen sich mit dem oben beschriebenen Verfahren die Daten für eine zufallsgesteuerte Variation der Schweißnähte in Tiefenrichtung ermitteln, und die Steuerdaten können entsprechend modifiziert bzw. ermittelt werden.

Bei den Steuerdaten kann es sich dementsprechend bevorzugt um Belichtungssteuerdaten handeln, wie beispielsweise Scandaten, die die Bewegung des Energiestrahls auf der Oberfläche definieren bzw. vorgeben, Steuerdaten zur Einstellung der Höhe der Energie bzw. Laserintensität, Steuerdaten über die "Form" des Strahls bzw. das Strahlprofil und/oder den Fokus bzw. die Ausdehnung des Strahls senkrecht zur Strahlrichtung. Weiterhin können diese Steuerdaten aber auch - wie später noch erläutert wird - andere Steuerinformationen umfassen, wie Beschichtungssteuerdaten, die vorgeben, wie dick eine aktuelle Schicht ist, Informationen zur Steuerung von Vor- oder Nachbeheizung mit anderen Energieeintragungsmitteln, zur Eindüsung von Schutzgas etc. All diese Parameter können ggf. die Einschweißtiefe beeinflussen und daher zur Steuerung derselben genutzt werden, wie später noch erläutert wird.

Lediglich der Vollständigkeit halber sei an dieser Stelle noch einmal erwähnt, dass es sich bei dem Energiestrahl sowohl um Teilchenstrahlung als auch um elektromagnetische Strahlung, wie z. B. Licht- bzw. vorzugsweise Laserstrahlung, handeln kann.

Es wird auch darauf hingewiesen, dass auch mehrere Energiestrahlen koordiniert eingesetzt werden können, und zwar parallel an verschiedenen Stellen des Bauteilquerschnitts (z. B. zur Erhöhung der Baugeschwindigkeit) oder auch kombiniert an einer Stelle, wie später noch an einem Beispiel erläutert wird. Dementsprechend müssen die Steuerdaten so ausgebildet sein, dass mehrere Energiestrahlen koordiniert gesteuert werden.

Ebenso sei an dieser Stelle bereits erwähnt, dass die Steuerdaten zum einen für eine "einfache" Steuerung des Prozesses dienen können, aber auch zur Regelung des Prozesses, beispielsweise indem die Steuerdaten Soll-Daten für eine weitergehende Regelung des Prozesses vorgeben. Mit anderen Worten, es können mit Hilfe des erfindungsgemäßen Verfahrens auch die benötigten Größen für einen Regler abgeleitet werden, welcher zur Rückkopplung beispielsweise Ist-Daten erhält, die mit einem Meltpool-Monitoring oder einer zeitlich aufgelösten Optical Tomography ermittelt werden.

Ebenso können auch andere komplexere Adaptionen durchgeführt werden. Hierzu kann ein Wahrscheinlichkeitsmaß definiert werden, das in Abhängigkeit der Distanz zu einem Ort einer Indikation der vorhergehenden Schichten detektiert durch ein Überwachungssystem nochmals angepasst wird.

Bei dem erfindungsgemäßen Verfahren zur additiven Fertigung eines Bauteils wird in einem Baufeld Aufbaumaterial, vorzugsweise umfassend ein Metallpulver, schichtweise aufgebaut und es erfolgt jeweils zwischen dem Aufbringen zweier Materialschichten von Aufbaumaterial eine selektive Verfestigung von Aufbaumaterial dadurch, dass eine Bestrahlung des Aufbaumaterials mit zumindest einem Energiestrahl erfolgt. Dabei wird wie erwähnt der Energiestrahl entlang einer Anzahl von Verfestigungsbahnen über das Baufeld bewegt und es erfolgt dabei zumindest zeitweise der Betrieb in einem Verzahnungsmodus, in dem an mehreren Umschaltpunkten eine ortsabhängige Soll-Einschweißtiefe des Energiestrahls geändert wird. Die Umschaltpunkte sind unter Nutzung einer vorgegebenen Wahrscheinlichkeitsverteilung, über zumindest einen definierten Bereich eines Querschnitts des Bauteils in der jeweiligen Schicht zufällig verteilt. Vorzugsweise kann eine homogene Wahrscheinlichkeitsverteilung genutzt werden. Es sind aber auch inhomogene Wahrscheinlichkeitsverteilungen nutzbar, wenn dies gewünscht wird.

Bei einer bevorzugten Variante wird eine Poisson-Verteilung derart genutzt, dass die örtliche Verteilung der Umschaltpunkte auf den Verfestigungsbahnen im Rahmen der räumlichen Statistik dem Ergebnis des Poisson-Punktprozesses entspricht. Hierbei kann also eine Ansteuerung der Vorrichtung mit Steuerdaten erfolgen, die nach dem erfindungsgemäßen Verfahren zur Generierung von Steuerdaten erstellt wurden.

Die Wahrscheinlichkeitsverteilung kann wie erwähnt auf eine zeitliche oder eine räumliche Festlegung einer Änderung der Soll-Einschweißtiefe bezogen sein. Eine zeitliche Festlegung kann insbesondere bei einer in Echtzeit vorgenommenen Erzeugung von Steuerdaten erfolgen, während eine räumliche Festlegung z. B. insbesondere bei vorab festgelegten Steuerdaten durchgeführt werden kann. Das erfindungsgemäße Verfahren zur additiven Fertigung eines Bauteils teilt die Vorteile des erfindungsgemäßen Verfahrens zur Generierung von Steuerdaten.

Eine erfindungsgemäße Steuerdatenerzeugungsvorrichtung zur Generierung von Steuerdaten für eine Vorrichtung zur additiven Fertigung eines Bauteils in einem Fertigungsprozess, in welchem in einem Baufeld Aufbaumaterial, vorzugsweise umfassend ein Metallpulver, schichtweise aufgebaut wird und jeweils zwischen dem Aufbringen zweier Materialschichten von Aufbaumaterial eine selektive Verfestigung von Aufbaumaterial dadurch erfolgt, dass eine Bestrahlung des Aufbaumaterials mit zumindest einem Energiestrahl von einer Bestrahlungsvorrichtung erfolgt, ist so ausgebildet, dass Steuerdaten erstellt werden, mit denen die Vorrichtung zur additiven Fertigung unter Nutzung der Steuerdaten so ansteuerbar ist, dass der Energiestrahl entlang einer Anzahl von Verfestigungsbahnen über das Baufeld bewegt wird und dabei zumindest zeitweise der Betrieb in einem Verzahnungsmodus erfolgt. Der Verzahnungsmodus ist wie gesagt derart ausgestaltet, dass bei der Bewegung des Energiestrahls über das Baufeld an mehreren Umschaltpunkten, welche unter Nutzung einer vorgegebenen Wahrscheinlichkeitsverteilung, vorzugsweise einer homogenen Verteilung, besonders bevorzugt einer Poisson-Verteilung, über zumindest einen definierten Bereich eines Querschnitts des Bauteils in der jeweiligen Schicht zufällig verteilt sind, eine ortsabhängige Soll-Einschweißtiefe des Energiestrahls geändert wird. Die Festlegung der Umschaltpunkte kann über eine Zeitskala verteilt und/oder räumlich verteilt erfolgen. Das heißt, die Steuerdatenerzeugungsvorrichtung ist so ausgebildet, dass Steuerdaten erstellt werden, mit denen die Vorrichtung zur additiven Fertigung unter Nutzung dieser Steuerdaten entsprechend erfindungsgemäß ansteuerbar ist.

Die erfindungsgemäße Steuerdatenerzeugungsvorrichtung teilt die Vorteile des erfindungsgemäßen Verfahrens zur Generierung von Steuerdaten.

Die Steuerdatenerzeugungseinrichtung kann beispielsweise Teil einer Steuereinrichtung einer Fertigungsvorrichtung zur additiven Fertigung von Bauteilen sein. Sie kann aber auch eigenständig auf einem anderen Rechner realisiert werden, um die Daten dann an die Steuereinrichtung zu übergeben.

Dementsprechend weist eine erfindungsgemäße Steuereinrichtung für eine solche Vorrichtung zur additiven Fertigung eines Fertigungsprozesses eine erfindungsgemäße Steuerdatenerzeugungsvorrichtung auf und/oder eine Schnittstelle zu einer solchen Steuerdatenerzeugungsvorrichtung zur Bereitstellung der betreffenden Steuerdaten, bzw. um die Steuerdaten von der Steuerdatenerzeugungsvorrichtung zu übernehmen und um die Fertigungsvorrichtung, insbesondere zur Bestrahlung des Aufbaumaterials mit dem Energiestrahl, unter Nutzung dieser Steuerdaten anzusteuern.

Die erfindungsgemäße Steuereinrichtung teilt die Vorteile des erfindungsgemäßen Verfahrens zur Steuerung einer Fertigungsvorrichtung zur additiven Fertigung von Bauteilen.

Eine erfindungsgemäße Vorrichtung (Fertigungsvorrichtung) zur additiven Fertigung von Bauteilen in einem additiven Fertigungsprozess weist neben den üblichen Komponenten, wie beispielsweise eine Zuführvorrichtung zum Einbringen von Aufbaumaterial - beispielsweise in Form einer Schicht von Aufbaumaterial - in einem Prozessraum, und eine Bestrahlungsvorrichtung zum selektiven Verfestigen des Aufbaumaterials durch Bestrahlung mittels eines Energiestrahls zumindest eine solche Steuereinrichtung auf.

Es sei an dieser Stelle darauf hingewiesen, dass die erfindungsgemäße Vorrichtung auch mehrere Bestrahlungsvorrichtungen aufweisen kann, die dann wie oben erwähnt entsprechend koordiniert mit den Steuerdaten angesteuert werden. Auch sei noch einmal erwähnt, dass insoweit der Energiestrahl auch aus mehreren sich überlagernden Energiestrahlen bestehen kann.

Die erfindungsgemäße Vorrichtung zur additiven Fertigung von Bauteilen teilt die Vorteile des erfindungsgemäßen Verfahrens zur additiven Fertigung eines Bauteils.

Die erfindungsgemäße Steuerdatenerzeugungseinrichtung kann insbesondere in Form einer Rechnereinheit mit geeigneter Software realisiert sein. Die Rechnereinheit kann z. B. hierzu einen oder mehrere zusammenarbeitende Mikroprozessoren oder dergleichen aufweisen. Insbesondere kann sie in Form von geeigneten Softwareprogrammteilen in der Rechnereinheit einer Steuerdatenerzeugungseinrichtung bzw. Steuereinrichtung realisiert sein. Eine weitgehend softwaremäßige Realisierung hat den Vorteil, dass auch schon bisher verwendete Rechnereinheiten, insbesondere Steuerdatenerzeugungseinrichtung und Steuereinrichtungen von Fertigungsvorrichtungen, auf einfache Weise durch ein Software- bzw. Firmware-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Rechnereinheit, insbesondere eine Steuerdatenerzeugungseinrichtung und/oder Steuereinrichtung, ladbar ist, mit Programmabschnitten, um alle Schritte des erfindungsgemäßen Verfahrens auszuführen, wenn das Programm in der Rechnereinheit bzw. Steuerdatenerzeugungseinrichtung und/oder Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware- Komponenten, wie z. B. Hardware-Schlüssel (Dongles etc.) zur Nutzung der Software, umfassen. Zum Transport zur Rechnereinheit bzw. Steuerdatenerzeugungseinrichtung und/oder Steuereinrichtung und/oder zur Speicherung an oder in der Rechnereinheit bzw. Steuerdatenerzeugungseinrichtung und/oder Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit, insbesondere der Steuerdatenerzeugungseinrichtung und/oder der Steuereinrichtung, einlesbaren und ausführbaren Programmabschnitte des Computerprogramms gespeichert sind.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Wie erwähnt gibt es verschiedene Prozessparameter, mit denen, da sie u. a. auch den lokalen Energieeintrag bestimmen, Einfluss auf die Einschweißtiefe genommen werden kann und über die somit die Soll-Einschweißtiefe an einem Umschaltpunkt geändert werden kann. Dabei kann auch das Schweißregime geändert werden, um die Energiestrahlleistung zu beeinflussen, d. h. es kann beispielsweise ein Wechsel zwischen Tiefschweißen und Wärmeleitungsschweißen erfolgen, wie dies später noch erläutert wird.

Bevorzugt wird für eine Änderung der Soll-Einschweißtiefe zumindest einer der folgenden Parameter gezielt bzw. bewusst geändert:

- die Energiestrahlleistung,
- die Intensitätsverteilung im Energiestrahl,
- die Fokuseinstellung,
- die Scangeschwindigkeit,
- die lokale Zuführung eines Gases oder einer Gasmischung zum Baufeld.

Die Energiestrahlleistung kann relativ schnell und einfach in herkömmlicher Weise geändert werden, z. B. durch Einstellung der Laserleistung, wenn ein Laserstrahl als Energiestrahl verwendet wird. Bevorzugt kann daher dieser Parameter genutzt werden.

Zur Veränderung der Intensitätsverteilung im Energiestrahl gibt es verschiedene Möglichkeiten. In der praktischen Anwendung bzw. in den bisher bekannten Maschinen bzw. Vorrichtungen zur additiven Fertigung werden üblicherweise Energiestrahlen mit einem (kreissymmetrischen) Gaußprofil eingesetzt. D. h. die Intensität ist in der Mitte des Energiestrahls am höchsten und schwächt sich in alle Richtungen radial nach außen quer zur Ausbreitungsrichtung bzw. aktuellen Strahlengangrichtung (auch kurz "Strahlrichtung" oder "Strahlachse" genannt) des Energiestrahls gemäß einer Gaußkurve ab. Ein solches Gaußprofil ist ohne weitere Maßnahmen aus den bisher verwendeten Energiestrahlquellen, beispielsweise einem üblichen Laser, erhältlich. Durch geeignete Strahlmodulatoren kann das Intensitätsprofil auch modifiziert werden, wobei später noch ein Beispiel hierfür gegeben wird. Die Intensitätsverteilung im Energiestrahl kann aber zum Beispiel durch Überlagerung mehrerer Energiestrahlen beeinflusst werden.

Das "Intensitätsprofil" ist dabei sinnvollerweise in einer gedachten Ebene senkrecht zur Einfallsrichtung (also der Strahlrichtung) kurz vor der Auftrefffläche definiert. Dieses definierte Intensitätsprofil entspricht in den meisten Situationen nicht dem Intensitätsprofil direkt auf der Oberfläche des Baufelds bzw. in der Arbeitsebene, da der Energiestrahl meist schräg auf das Baufeld auftrifft. Dies schließt aber nicht aus, dass im Rahmen einer Einstellung eines geeigneten Intensitätsprofils auch die jeweilige Schrägstellung mitberücksichtigt wird.

Die Fokuseinstellung ist eng verwandt mit der Einstellung des Intensitätsprofils bzw. kann auch als ein Unterfall davon gesehen werden. Die Veränderung der Fokuseinstellung (d.h. die Einstellung der Fokuslage) führt ja zu einer Variation der Energiestrahlausdehnung an der Auftrefffläche, indem u. a. ein Durchmesser des Energiestrahls auf dem Baufeld variiert wird.

Die Scangeschwindigkeit beeinflusst ebenfalls den lokalen Energieeintrag (an der jeweils aktuellen Position), denn eine niedrige Scangeschwindigkeit bedeutet, dass der Energiestrahl länger braucht, um einen Ort zu überstreichen, wodurch bei gleichbleibender Strahlungsleistung des Energiestrahls selbst der Energieeintrag erhöht wird, und eine erhöhte Scangeschwindigkeit führt umgekehrt zu einem verringerten Energieeintrag. Wenn die Bestrahlungseinheit zum Beispiel einen sogenannten Galvanometerscanner aufweist, kann die Scangeschwindigkeit einfach darüber gesteuert werden. Ebenso einfach wäre es aber auch möglich, die Verfahrgeschwindigkeit einer verfahrbaren Belichterzeile der Bestrahlungseinheit zu steuern.

Auch durch die lokale Zuführung eines Gases oder einer Gasmischung, welche(s) eine andere chemische Zusammensetzung als das allgemeine Prozessgas aufweist, kann die Einschweißtiefe beeinflusst werden. Eine "lokale" Zuführung eines Gases oder einer Gasmischung zum Baufeld ist dabei so zu verstehen, dass dieses spezielle Gas oder die Gasmischung nur in einem vorgegebenen Teilbereich eines aktuell zu verfestigenden Querschnitts des Bauteils erfolgt, z. B. in einem Bereich um die Auftrefffläche des Energiestrahls auf der Bauebene, während ansonsten die Prozesskammer mit einem anderen Prozessgas befüllt ist. Beispielsweise kann eine bewegbare Gasdüse mit einem flexiblen Versorgungsschlauch in der Prozesskammer angeordnet werden, durch die lokal Helium oder eine Helium-Argon-Gasmischung einem bestimmten Teilbereich eines Bauteilquerschnitts zugeführt wird, der gerade verfestigt wird.

Besonders bevorzugt kann die Tiefeneinstellung bzw. die Änderung der Soll-Einschweißtiefe durch eine für einen spezifischen Fertigungsprozess angepasste Wahl aus einer Vielzahl von Prozessparametern erfolgen, so dass trotz der Änderung einzelner Parameter zur Änderung der Soll-Einschweißtiefe die gewünschten spezifischen Eigenschaften eines Bauteils erreicht werden können.

Für die genaue Umschaltstrategie im Verzahnungsmodus, d. h. mit welchen Soll-Einschweißtiefen gearbeitet wird und in welcher Weise zwischen verschiedenen Soll-Einschweißtiefen umgeschaltet wird, gibt es verschiedene Möglichkeiten. Dabei kann die optimale Strategie auch abhängig von der konkreten Aufgabenstellung, z. B. der Art des Bauteils und den Anforderungen an das Bauteil, sein.

Bei einer bevorzugten Variante wird an einem Umschaltpunkt jeweils gezielt zwischen zumindest zwei verschiedenen, vorab definierten ortsabhängigen Soll-Einschweißtiefen gewechselt. Dies führt zu einer bezüglich der Tiefenänderung relativ gleichmäßigen Verzahnung. Die mindestens zwei Soll-Einschweißtiefen weisen vorzugsweise zumindest eine (in der Regel weniger tiefe) Standard-Soll-Einschweißtiefe und eine (vorzugsweise tiefere) Sonder-Soll-Einschweißtiefe auf.

Die Wahl der Standard-Soll-Einschweißtiefe kann zum Beispiel abhängig von der Materialart und den Anforderungen an die Festigkeit des Bauteils sein. Die tiefere Sonder-Soll-Einschweißtiefe kann zum Beispiel durch die Geometrie bzw. Abmessungen des Bauteils und Festigkeitsanforderungen bestimmt werden. Vorteilhaft kann also auch die Wahl der ortsabhängigen Soll-Einschweißtiefe an die jeweiligen lokalen Bedingungen in einem Bauteil und an dessen Abmessungen angepasst werden, so dass insbesondere Festigkeitseigenschaften des Bauteils durch die Änderung der Soll-Einschweißtiefe nicht beeinträchtigt werden. Beispielsweise ist es in Bereichen mit geringen Dicken sinnvoller, eine geringere Sonder-Soll-Einschweißtiefe zu wählen als in Bereichen, bei denen die Dicke kein limitierender Faktor für die Einschweißtiefe ist. Geringe Dicken treten zum Beispiel bei einer Bearbeitung von Bauteilen im Down-Skin-Modus (also in den untersten Bauteilschichten oder in einem Überhangbereich) auf, in denen die Soll-Einschweißtiefe daher reduziert wird.

Bei einer anderen bevorzugten Variante, welche innerhalb eines kompletten Bauprozesses alternativ oder in Kombination mit der erstgenannten Variante genutzt werden kann, wird an einem Umschaltpunkt jeweils eine neue ortsabhängige Soll-Einschweißtiefe in Abhängigkeit von einer gemäß einer vorgegebenen (zweiten) Wahrscheinlichkeitsverteilung erzeugten Zufallszahl gewählt. Diese Zufallszahl kann wieder echt zufällig oder quasi-zufällig bzw. pseudo-zufällig sein. Bei dieser Vorgehensweise ist also auch die Soll-Einschweißtiefe in gewissen Grenzen zufällig.

Nach einem Wechsel von einer ersten ortsabhängigen Soll-Einschweißtiefe auf eine zweite ortsabhängige Soll-Einschweißtiefe (z. B. von der weniger tiefen ortsabhängigen "Standard-Soll-Einschweißtiefe" auf die tiefere "Sonder-Soll-Einschweißtiefe") an einem ersten Umschaltpunkt kann dann im weiteren Verlauf entlang der Verfestigungsbahn eine Rückschaltung auf die erste ortsabhängige Soll-Einschweißtiefe oder eine Umschaltung auf eine andere ortsabhängige Soll-Einschweißtiefe bevorzugt nach einer der folgenden Strategien erfolgen:

Zum einen kann der Wechsel der Einschweißtiefe jeweils nach einer vorgegebenen, definierten Zeitspanne und/oder nach einer definierten weiteren Wegstrecke erfolgen. Dabei ist zu beachten, dass eine Festlegung einer definierten Zeitspanne bei Kenntnis der Scangeschwindigkeit einer definierten weiteren Wegstrecke entspricht. Die definierte Wegstrecke kann hierbei vorzugsweise mindestens 30 $\mu$m, besonders bevorzugt mindestens 50 $\mu$m betragen. Andererseits beträgt die definierte Wegstrecke vorzugsweise höchstens 300 $\mu$m, weiter bevorzugt höchstens 200 $\mu$m, weiter bevorzugt höchstens 150 $\mu$m, weiter bevorzugt höchstens 100 $\mu$m, weiter bevorzugt höchstens 80 $\mu$m, besonders bevorzugt höchstens 60 $\mu$m.

Zum anderen kann ein Wechsel auch erst an einem nachfolgenden zweiten Umschaltpunkt entlang der Wegstrecke erfolgen, also letztlich in Abhängigkeit von einer gemäß der Wahrscheinlichkeitsverteilung erzeugten nachfolgenden Zufallszahl.

Es wird darauf hingewiesen, dass bei gleicher Anzahl an statistisch verteilten Umschaltpunkten die Häufigkeit der Umschaltungen insgesamt bei der ersten Variante doppelt so hoch ist wie bei der zweiten Variante, da ja bei der ersten Variante pro statistisch angeordnetem Umschaltpunkt immer zwei Umschaltungen (z. B. Hin- und Rückschaltungen) im festen (Zeit- und/oder Orts-) Abstand zueinander erfolgen.

Unabhängig von der gewählten Variante dieser Rückschalt- bzw. Umschaltstrategien ist jedoch vorteilhafterweise eine "mittlere Einschweißtiefen-Umschaltfrequenz" zumindest höher als eine im Fertigungsprozess zu erwartende abgeschätzte Frequenz von prozessbedingten unvermeidlichen unbeabsichtigten Schwankungen in der tatsächlichen Ist-Einschweißtiefe, mit denen es wie bereits oben erwähnt zu Überlagerungseffekten kommen kann. Die "mittlere Einschweißtiefen-Umschaltfrequenz", die der "Intensität" des statistischen Prozesses entspricht, ist dabei definiert durch die Anzahl aller Umschaltpunkte pro Wegstrecke oder Zeit, also der zufällig verteilten Umschaltpunkte zuzüglich der ggf. davon abhängigen Rückschaltpunkte bzw. Umschaltpunkte nach der jeweiligen Zeitspanne bzw. Wegstrecke.

Die unbeabsichtigten Schwankungen der Ist-Einschweißtiefe sind dabei meist näherungsweise periodisch, wobei eine Oszillation über mindestens 20 bis 40 Mikrovektoren, also bei einer Scangeschwindigkeit von 1m/s bei 200 bis 400 μm, verläuft.

Eine Umschaltung zwischen zwei Soll-Einschweißtiefen kann im Übrigen nicht nur innerhalb einer einzigen Verfestigungsbahn, sondern auch bei einem Wechsel zwischen zwei indirekt oder direkt benachbarten Verfestigungsbahnen, d. h. bei einem Bahnwechsel, insbesondere von einem Hatch zum nächsten, erfolgen.

Auch für die Bestimmung der Umschalttiefe, d. h. die Tiefendifferenz (bzw. den Tiefenunterschied) zwischen einer zweiten ortsabhängigen Soll-Einschweißtiefe (auf die am Umschaltpunkt umgeschaltet wird) und der ersten ortsabhängigen Soll-Einschweißtiefe (von der aus umgeschaltet wird, z. B. die ortsabhängige Standard-Soll-Einschweißtiefe) können je nach Situation unterschiedliche Strategien genutzt werden. Der Tiefenunterschied stellt dabei ein Maß dar, welches angibt, über wie viele Schichten bzw. welche Tiefe sich die eine Soll-Einschweißtiefe mehr erstreckt als die andere.

Bei einer bevorzugten Vorgehensweise wird zumindest bereichsweise ein Tiefenunterschied zwischen der zweiten ortsabhängigen Soll-Einschweißtiefe und der ersten ortsabhängigen Soll-Einschweißtiefe unabhängig von der am Umschaltpunkt aktuell eingestellten ersten ortsabhängigen Soll-Einschweißtiefe, also deren Tiefenerstreckung gewählt. Der Tiefenunterschied wird bei dieser Methode also als im Wesentlichen fix festgelegt. Dabei kann es z. B. in einem Hatch egal sein, ob ein Wechsel der Soll-Einschweißtiefe in einem Fade-In- oder Fade-Out-Bereich oder im mittleren Bereich des Hatch erfolgt. Dass die Vorgehensweise bereichsweise angewendet wird, ist hierbei wieder so zu verstehen, dass dieser feste Tiefenunterschied nur in bestimmten Arbeitsbereichen, also z. B. in bestimmten Segmenten des Bauteils, gilt. Der gewählte Tiefenunterschied kann also z. B. abhängig davon sein, ob ein Umschaltpunkt im Überhangbereich liegt oder nicht.

Bei einer weiteren bevorzugten Vorgehensweise kann der Tiefenunterschied zwischen der zweiten ortsabhängigen Soll-Einschweißtiefe und der ersten ortsabhängigen Soll-Einschweißtiefe zumindest bereichsweise proportional zur ersten ortsabhängigen Soll-Einschweißtiefe, also deren Tiefenerstreckung gewählt werden. Auf diese Weise kann z. B. der Tiefenunterschied im Fade-in-Bereich oder Fade-out-Bereich eines Hatch geringer als in der Mitte gewählt werden. In diesen Bereichen kann es u. U. sinnvoll sein, die Verzahnung zu reduzieren oder im Extremfall zu vermeiden, da der gewünschte Effekt einer Verringerung von Spratzerbildung und Porosität durch eine abrupte Leistungssteigerung abgeschwächt oder aufgehoben werden kann. Fade-in-Bereiche und Fade-out-Bereiche weisen in der Praxis Längen von etwa 0,1 bis 0,5 mm auf, was abhängig von der lokalen Scangeschwindigkeit etwa 5 bis 100 Mikrovektoren entsprechen kann. Ebenso kann automatisch dafür gesorgt werden, dass in einem Downskin-Bereich, also insbesondere in Überhangbereichen, in denen die erste ortsabhängige Soll-Einschweißtiefe deutlich geringer ist, auch der Tiefenunterschied entsprechend geringer ist. Da wie gesagt ein Downskin-Bereich ein Verfestigungsbereich ist, welcher unmittelbar über oder in einer definierten Zahl von Schichten oberhalb einer Schicht unverfestigten Pulvers liegt, könnten dort höhere Einschweißtiefen bzw. Verfestigungstiefen zu einer erhöhten Rauigkeit führen, was unerwünscht sein kann, weil es die sichtbare Unterseite eines Bauteils betrifft.

Zur Definition der Soll-Einschweißtiefen (bezogen auf die im Pulverbettverfahren nach oben weisende verfestigte Querschnittoberfläche des Bauteils) und der Tiefendifferenzen bietet es sich an, auf die sogenannte "nominelle Schichtdicke" des Aufbauprozesses (Bearbeitungsprozesses) zurückzugreifen. Bei der "nominellen Schichtdicke" handelt es sich um die Schichtdicke, um die das Bauteil nach dem ersten Einlaufprozess (also nach Aufbau der ersten Schichten) im weiteren Bearbeitungsprozess im Mittel wächst.

Bei einem selektiven Lasersinterverfahren ist die nominelle Schichtdicke z. B. im Allgemeinen kleiner als die aufgetragene Materialschicht, da die Dicke der Schicht ja beim Umschmelzen und aufgrund diverser Verluste, z. B. durch Gasströmung, um ca. 50% abnimmt. Tatsächlich kann die nominelle Schichtdicke von verschiedenen Prozessparametern, insbesondere dem verwendeten Aufbaumaterial, abhängen.

In Abhängigkeit von der nominellen Schichtdicke werden in der Regel auch eine Mindest-Einschweißtiefe und eine maximale Einschweißtiefe, also die Höchst-Einschweißtiefe, für den Prozess festgelegt. Bevorzugt entspricht die Mindest-Einschweißtiefe eines neuen Schmelzbads in das bereits verfestigte Material in etwa einer nominellen Schichtdicke, besonders bevorzugt zwei nominellen Schichtdicken. Die Höchst-Einschweißtiefe entspricht dagegen vorzugsweise dem Achtfachen einer nominellen Schichtdicke, besonders bevorzugt dem Siebenfachen einer nominellen Schichtdicke.

In dem folgenden Beispiel werden als Mindest-Einschweißtiefe eine nominelle Schichtdicke und als Höchst-Einschweißtiefe das Achtfache der nominellen Schichtdicke festgelegt. Eine typische nominelle Schichtdicke liegt bei einem Lasersinterprozess bei 30μm Schichtdicke. Dieser Wert entspricht in diesem Beispiel der Mindest-Einschweißtiefe. Ein Bearbeitungsprozess mit dem genannten Wert wird auch als "30μm-Prozess" bezeichnet. Die angenommene faktische Dicke der neu aufgetragenen Pulverschicht beträgt dagegen 120μm. Insgesamt ergibt sich somit eine Tiefenerstreckung des Schmelzbads ausgehend von der verfestigten Bauteiloberfläche von 150μm. Wie erwähnt halbiert sich aber in etwa die Dicke der neu aufgetragenen Pulverschicht während der Bearbeitung. Mit einer Maximal-Einschweißtiefe in der Höhe des Achtfachen der nominellen Schichtdicke ergibt sich ein maximaler Wert für die Tiefenerstreckung des Schmelzbads ausgehend von der verfestigten Bauteiloberfläche von 7 x 30μm = 210μm + 30μm = 240μm. Bei diesen Berechnungen werden nur die verfestigten Schichten gezählt, die noch komplett unverfestigte, neu aufgezogene Pulverschicht wird nicht berücksichtigt.

Die Tiefendifferenzen bzw. die Soll-Einschweißtiefen können nun, bezogen auf die nominelle Schichtdicke, wie folgt genauer spezifiziert werden:
Bevorzugt beträgt eine Tiefendifferenz zwischen einer ersten ortsabhängigen Soll-Einschweißtiefe und einer zweiten ortsabhängigen Soll-Einschweißtiefe mindestens den Wert einer nominellen Schichtdicke, vorzugsweise mindestens den doppelten Wert einer nominellen Schichtdicke, besonders bevorzugt den dreifachen Wert einer nominellen Schichtdicke.

Vorzugsweise erstreckt sich zumindest eine erste ortsabhängige Soll-Einschweißtiefe über das Fünffache einer nominellen Schichtdicke, wogegen sich zumindest eine zweite ortsabhängige Soll-Einschweißtiefe bevorzugt mindestens über das Siebenfache einer nominellen Schichtdicke erstreckt.

Wie bereits oben erläutert, gibt es je nach konkreter Aufgabenstellung mehrere Möglichkeiten, eine geeignete statistische Verteilung der Umschaltpunkte zu erreichen.

Wenn die Verzahnung gleichmäßig in einem betrachteten Bauteilabschnitt (bzw. Segment) sein soll, so bietet sich dafür eine homogene Wahrscheinlichkeitsverteilung an.

Eine besonders bevorzugte Wahrscheinlichkeitsverteilung ist wie gesagt eine Poisson-Verteilung. Eine statistische Verteilung der Umschaltpunkte, die dieser Verteilung folgt, lässt sich bevorzugt unter Nutzung der folgenden Gleichung erreichen:

$$dt = -\log(1.0 - R)/I \qquad\qquad (1)$$

Diese Gleichung gibt ein Zeitintervall dt an, nach dessen Ablauf jeweils eine zufällige Umschaltung erfolgen soll. Es ist hierbei zu beachten, dass bei einer näherungsweise festen Scangeschwindigkeit das Zeitintervall auch einer bestimmten Wegstrecke entlang der Verfestigungsbahn entspricht. Ebenso kann der ermittelte Wert also auch als eine Wegstreckendifferenz ausgegeben werden.

R ist in Gleichung (1) ein Wert aus einem Zufallsgenerator, welcher eine zwischen 0 und 1 gleich verteilte Zufallszahl (i. d. R. eine Gleitkommazahl) angibt.

Die Zahl I (eine natürliche Zahl größer 0) ist die Intensität des Punktprozesses und bestimmt die Dichte der Umschaltpunkte (Sie ist nicht zu verwechseln mit der Intensität des Energiestrahls). Die Intensität I kann definiert werden durch: I = UP/v wobei UP die Anzahl der Umschaltpunkte pro Meter Schweißbahn und v die Scangeschwindigkeit bezeichnet. Ist die Intensität I also hoch, liegen die Umschaltpunkte dichter als bei einer niedrigen Intensität. Dies wird später noch erläutert.

Bevorzugt kann ein Wert für UP mindestens 50 Umschaltpunkte pro Meter betragen, besonders bevorzugt mindestens 500 Umschaltpunkte pro Meter, weiter bevorzugt mindestens 1000 Umschaltpunkte pro Meter.

Bevorzugt kann ein Wert für UP höchstens 1500 Umschaltpunkte pro Meter, besonders bevorzugt höchstens 2000 Umschaltpunkte pro Meter, weiter bevorzugt höchstens 2500 Umschaltpunkte pro Meter.

Je nach Bauteil und Anforderungen kann es aber auch von Vorteil sein, in vorbestimmten Arbeitsbereichen, also Segmenten des Bauteils, eine räumliche oder zeitliche Dichte der Verzahnungsstellen, z. B. ein Verhältnis der Zahl der Umschaltpunkte im Verhältnis zur Zahl der Mikrovektoren in einem Querschnitt, im Verzahnungsmodus zu erhöhen oder zu reduzieren oder im Extremfall sogar den Verzahnungsmodus ganz zu deaktivieren.

Zum Beispiel können bevorzugt auch Ergebnisse aus strukturmechanischen Simulationen herangezogen werden, um beispielsweise in Bauteilregionen, die im Betrieb starken statischen und/oder dynamischen Belastungen unterliegen können und in denen die Entstehung eines Risses deswegen wahrscheinlicher ist, eine größere Anzahl an Hindernissen für die Rissausbreitung vorzusehen.

Bei Bauteilen, bei welchen die Hauptschädigung in Form von Ermüdungsrissen zu erwarten ist, kann dieses Verfahren genutzt werden, um die Wartung und Inspektion dieser Bauteile zu erleichtern. Beispielsweise können Regionen nahe der Bauteiloberfläche, die im späteren Einsatz des Bauteils leicht zugänglich sind, gezielt nicht mit dem erfindungsgemäßen Verfahren bearbeitet werden, oder es können sogenannte Risskorridore erzeugt werden, welche einen entstehenden Riss gezielt zur Bauteiloberfläche leiten, währenddessen seine Ausbreitung in das Bauteilinnere gebremst bzw. behindert wird. Dies ermöglicht mit Verfahren wie beispielweise der Farbeindringprüfung eine kostengünstige Inspektion des Bauteils, mittels der ein Grad der Materialermüdung leicht erkennbar wird. Die genannten Risskorridore können durch die geschickte Anordnung von Umschaltpunkten bzw. durch geeignete Wahl der Dichten optional in zusätzlicher Abhängigkeit von der Bauteilgestalt gezielt lokal platziert werden.

Ein Betriebsmodus mit einer erhöhten Anzahl von Verzahnungsstellen wird z. B. bevorzugt in einem Core-Modus/InFill-Modus, also nur in einem mittleren Bereich, durchgeführt, mit einem Abstand von mehreren Spuren zu irgendwelchen Bauteilrändern, wobei als Rand in diesem Sinne auch ein innerer Rand eines Bauteils zählen kann, z. B. um ein Loch herum oder dergleichen.

Eine Variation in Form einer Reduktion bis hin zur vollständigen Deaktivierung des Verzahnungsmodus kann insbesondere so stattfinden, dass die Anzahl der Verzahnungen, d. h. die Dichte der Umschaltpunkte zu einem definierten äußeren Bereich des Bauteils hin reduziert wird, um z. B. Risse gezielt zur Oberfläche zu leiten, wo diese mittels einfacher Prüfverfahren, wie Risseindringprüfung, bei Inspektionen als Indikator für ein baldiges Bauteilversagen dienen können. Das Bauteil kann dann rechtzeitig ausgetauscht werden.

Eine solche Ausgestaltung lässt sich beispielsweise durch eine inhomogene Wahrscheinlichkeitsverteilung realisieren. Bei einer bevorzugten Variante kann hierzu die Intensität, welche die Dichte der Umschaltpunkte bestimmt, eine Funktion des Abstands zum Rand des Bauteils sein, insbesondere zum Rand hin abnehmen. Z. B. könnte bei der oben mittels Gleichung (1) definierten Poisson-Verteilung die Intensität I eine Funktion des Abstands zum Rand des Bauteils sein.

Ein Beispiel hierfür wäre die Funktion

$$I(d) = I_0(0.5 + 0.5 \tanh(\tfrac{d-m}{A})) \qquad\qquad (2)$$

Diese Sigmoidfunktion beschreibt die Änderung der Intensität des Punktprozesses als Funktion des Abstandes zum nächsten Rand als kontinuierliche Funktion. Dabei bezeichnet d den Abstand zum Rand, m den Abstandswert zum Rand, bei dem die halbe Intensität des Punktprozesses im Bauteilkern, bezeichnet als $I_0$, erreicht werden soll und A ist ein Maß zum Einstellen der Breite des graduellen Übergangs zwischen dem Rand- und dem Kernbereich.

Wie oben bereits erwähnt kann bei einer Veränderung der Soll-Einschweißtiefe insbesondere auch das Schweißregime geändert werden, d. h. ob beispielsweise in einem Tiefschweißverfahren und/oder einem Wärmeleitungsschweißverfahren gearbeitet wird. Derzeit wird in der Praxis beim Lasersintern von Metallen meistens mit einem sogenannten "Tiefschweiß-Prozess" ("keyhole mode welding") gearbeitet. Ein Schweißprozess wird als Tiefschweiß-Prozess definiert, wenn sich eine Dampfkapillare, auch "Keyhole" genannt, bildet. Der auftreffende Energiestrahl, insbesondere Laserstrahl, erzeugt hierbei einen See aus geschmolzenem Material bzw. Metall. Erreicht die Seeoberfläche des Materials dessen Siedetemperatur, drückt die Dampfblase die Schmelze seitlich und nach unten weg und erzeugt so die Dampfkapillare. Der Durchmesser dieses Keyholes ist kleiner als der des Energiestrahls bzw. Laserstrahls. Ein Vorteil dieses Tiefschweiß-Prozesses liegt in der hohen Tiefenwirkung. Das heißt, es lassen sich gemessen am Fokusdurchmesser deutlich höhere Eindringtiefen erzielen, als wenn eine solche Verdampfung nicht stattfinden würde. Ein Schweißprozess ohne Verdampfen wird dagegen auch als "Wärmeleitungsschweißen" (auch "conduction mode welding" oder "conduction laser welding") bezeichnet.

Bevorzugt wird im Rahmen der Erfindung zumindest zeitweise ein Wärmeleitungsschweißprozess und zumindest zeitweise ein Tiefschweißprozess genutzt. Da die Prozessänderung auf die Änderung der Soll-Einschweißtiefe abzielt, kann die Umschaltung wie oben erläutert zufällig im Rahmen der definierten Zufallsverteilung erfolgen.

Die Art des Schweißprozesses kann z. B. durch die Beobachtung der Auftrefffläche des Energiestrahls auf dem Baufeld mittels einer Kamera (optisch, IR, UV), durch die Analyse der von der Auftrefffläche emittierten Strahlung oder aber durch Analysen an während Vorversuchen hergestellten Testobjekten ermittelt werden. Als Kriterium für das Vorliegen eines Wärmeleitungsschweißprozesses kann das weitgehende Ausbleiben von Emissionen, die durch die beim Tiefschweißprozess erzeugte Dampfkapillare bedingt sind, also z. B. Spratzer bzw. Gasjets sowie Metalldampf, verwendet werden. Ein weiteres Kriterium ist das Aspektverhältnis des Schmelzbades (Durchmesser des Schmelzbades parallel zur Arbeitsebene im Verhältnis zur Tiefe, d. h. senkrecht zur Arbeitsebene), welches beim Wärmeleitungsschweißen oberhalb von 2:1, auf jeden Fall unterhalb von 100:1 liegt, oder/aber die Oberflächentemperatur des Aufbaumaterials. Wenn letztere unter dem Verdampfungspunkt einer bzw. aller Komponenten des Aufbaumaterials liegt, dann kann sich nicht das für den Tiefschweißprozess erforderliche "Keyhole" ausbilden. In der Regel liegt ein Tiefschweiß-prozess vor, wenn die eingebrachte Leistung pro Fläche 1 MW/cm$^2$ übersteigt.

Dabei kann vorzugsweise von einem Wärmeleitungsschweißprozess zeitweise in einen Tiefschweißprozess umgeschaltet werden. Alternativ oder zusätzlich kann auch bevorzugt eine Wärmeleitungsschweißbahn zeitweise durch eine Tiefschweißbahn überlagert werden.

Beispielsweise kann kurzzeitig im Wärmeleitungsschweiß-Schmelzbad lokal ein Tiefschweiß-Schmelzbad erzeugt werden, dessen Tiefenerstreckung variiert wird. Auf diese Weise kommt eine Verzahnung zustande. Das Wärmeleitungsschweiß-Schmelzbad muss dabei nicht variiert werden. Beide Schmelzbäder können also zumindest zeitweise gleichzeitig erzeugt werden, wobei das Wärmeleitungsschweiß-Schmelzbad vorzugsweise permanent durch das Aufbaumaterial getrieben wird.

Dies kann beispielsweise bevorzugt durch eine zeitweise Überlagerung von verschiedenen Intensitätsprofilen in der Arbeitsebene erfolgen. Zum Beispiel kann ein relativ großer Top-Hat-Profil-Strahl zeitweise durch einen oder mehrere kleine(n) Gaußprofil-Strahl(en) überlagert werden. Die Strahlausdehnungen der beiden Strahlprofile (Top-Hat und Gauß) können sich dabei bevorzugt um den Faktor 5 bis 10 unterscheiden. Unter einer Strahlausdehnung ist in diesem Sinne eine beliebige Abmessung bzw. Strecke quer (zur Strahlachse) durch den Strahl zu verstehen, also beispielsweise ein Strahldurchmesser bzw. eine Strahlbreite, wobei unter einer Strahlbreite immer die Ausdehnung senkrecht zur aktuellen Bewegungsrichtung der Auftrefffläche auf dem Baufeld zu verstehen ist. Dabei muss die Strecke nicht zwingend durch die Strahlachse bzw. das Zentrum der (Gesamt-) Intensitätsverteilung verlaufen, insbesondere wenn der Energiestrahl keine rotationssymmetrische Intensitätsverteilung aufweist. Die Strahlausdehnung wird hierbei so definiert, dass sie auf der definierten Strecke von einem Rand zum gegenüberliegenden Rand der Intensitätsverteilung verläuft, wobei der Rand wiederum hier willkürlich so definiert wird, dass 99 % der Strahlungsleistung des Energiestrahls sich innerhalb des Randes (d. h. in der durch den Rand eingeschlossenen Fläche) befinden. Es müssen dafür im Übrigen nicht unbedingt zwei separate Strahlen kombiniert werden, sondern es kann per Strahlformung eine Intensitätsverteilung derart erzeugt werden, dass eine Überlagerung zweier oder mehrerer separater Strahlen nachgebildet wird.

Wie bereits oben erläutert kann vorzugsweise vorab, bei einer Erstellung der Steuerdaten vor dem Start des gesamten Bauprozesses (oder zumindest vor dem Start des Teils des Bauprozesses, in dem die jeweilige Schicht verfestigt wird), festgelegt bzw. berechnet werden, an welchen Punkten sich die statistisch verteilten Umschaltpunkte (z. B. in der jeweiligen Schicht) befinden. Dies kann vorzugsweise im Rahmen einer Art Simulation erfolgen, in der virtuell die gesamte Verfestigungsbahn bzw. die Verfestigungsbahnen im relevanten Bereich des Querschnitts des Bauteils in der betreffenden Schicht abgefahren wird/werden und dabei statistisch bzw. zufällig (z. B. unter Nutzung der Gleichung (1), wie sie oben erläutert wurde) die Umschaltpunkte gesetzt werden.

Bevorzugt umfassen die Steuerdaten wie erwähnt also für jede Materialschicht bzw. Materialauftragsebene, d. h. die aktuelle Bauebene, in der der Laser über eine neue aufgetragene Schicht verfährt, eine Schweißtiefenkarte bzw. Umschaltkarte. Die Schweißtiefenkarte umfasst dabei zumindest die Umschaltpunkte, also zumindest die Orte, an denen die Umschaltung erfolgt.

Bevorzugt enthält die Schweißtiefenkarte aber zusätzlich auch die Informationen, an welchem Umschaltpunkt welche ortsabhängige Soll-Einschweißtiefe bewusst einzustellen ist. Der Ort und zusätzlich die absoluten Parameter, wie zum Beispiel die Energiestrahlleistung, die Intensitätsverteilung im Energiestrahl, die Fokuseinstellung, die Scangeschwindigkeit und/oder eine lokale Zuführung eines Gases oder einer Gasmischung zum Baufeld oder die Parameteränderungen, geben dann in der Schweißtiefenkarte z. B. vor, wo der Energiestrahl bei einer Bewegung entlang der verschiedenen Verfestigungsbahnen jeweils wie zu betreiben ist (wodurch im Übrigen auch das lokale Schweißregime festgelegt ist). Wenn die Steuerdaten eine solche komplette Schweißtiefenkarte mit den wesentlichen Parametern bzw. Parameteränderungen umfasst, können darin insbesondere auch die Modifikationen innerhalb der Scanspur, beispielsweise Fade-in/Fade-out etc., ggf. angegeben werden.

Die Form der Schweißtiefenkarte bzw. Umschaltkarte ist beliebig, sie kann zum Beispiel pixelweise oder auch in Form von Funktionen oder indirekt als Parameteränderungen für die Bestrahlungseinheit entlang der abzufahrenden Verfestigungsbahnen angegeben werden. Die Schweißtiefenkarte kann für jede Schicht separat oder auch als 3D-Volumenkarte angegeben werden. Vorteilhaft kann für jeden räumlichen Punkt, der anzufahren ist, ortsabhängig die Soll-Einschweißtiefe (direkt oder durch Angabe der Parameter oder Parameteränderungen wie oben erläutert) so festgelegt werden, dass die Schweißtiefenkarte als Vorgabe für die Steuerung der Maschine genutzt werden kann.

Die Erstellung einer Schweißtiefenkarte hat zudem einen weiteren erheblichen Vorteil. So kann bevorzugt eine räumliche Verteilung der Umschaltpunkte in der Schweißtiefenkarte hinsichtlich eines Qualitätskriteriums, vorzugsweise hinsichtlich einer Soll-Verteilungsfunktion der Abstände der Umschaltpunkte, geprüft werden.

Diese Prüfung kann - sofern die Schweißtiefenkarte vorab, d. h. vor dem eigentlichen Scanprozess, erstellt wird - auch bevorzugt entsprechend vor dem Scanprozess erfolgen. Dabei kann vorzugsweise, wenn das Qualitätskriterium nicht erfüllt ist, eine neue oder geänderte Schweißtiefenkarte festgelegt bzw. berechnet werden.

D. h. die Schweißtiefenkarten werden somit zunächst "virtuell" geprüft, notfalls (z. B. iterativ) verändert und erst, wenn sie passen, werden die modifizierten Schweißtiefenkarten für die Steuerung genutzt, d. h. es werden die Steuerdaten erzeugt, in denen die Umschaltpunkte gemäß der Schweißtiefenkarte berücksichtigt sind. Bei der Prüfung kann über das Qualitätskriterium, z. B. durch ausreichende Einhaltung der Soll-Verteilungsfunktion, die potentielle Risslänge reduziert werden.

Die Qualitätsprüfung erfolgt bevorzugt durch einen Vergleich mit einer Soll-Verteilungsfunktion, die Auskunft über eine Verteilung nächster Nachbarn gibt. Eine solche Soll-Verteilungsfunktion kann zum Beispiel eine G-Funktion umfassen. Die G-Funktion gibt Auskunft darüber, ob die Verteilung der festgelegten Umschaltpunkte einer Poisson-Verteilung nahekommt, was einem idealen Verlauf entspricht. Die G-Funktion wird im Englischen als "nearest neighbour distance distribution function" oder auch als "event-to-event distribution" oder "inter-event distribution" bezeichnet. Die G-Funktion eines Punktprozesses X ist die kumulative Verteilungsfunktion G der Distanz eines typischen zufälligen Punkts X zum nächsten anderen zufälligen Punkt X. Die Kurve der G-Funktion gibt Wahrscheinlichkeiten in Abhängigkeit von möglichen Risslängen an, mit der ein Riss der Länge r auf ein Hindernis trifft. Liegt zum Beispiel eine Wahrscheinlichkeit von 100% bei der Risslänge $r = 200\,\mu m$ vor, so wird also ein Riss mit einer Wahrscheinlichkeit von 100% einmal umgelenkt, wenn er die Strecke $r = 200\,\mu m$ durchlaufen hat. Anders ausgedrückt ist $r = 200\,\mu m$ die Länge, die ein Riss maximal laufen kann, bis er auf ein Hindernis trifft. Ein Wert r von $200\,\mu m$ ist auch ein besonders geeigneter Wert.

Zur Qualitätsprüfung kann zum Beispiel ein Toleranzbereich um die Soll-Verteilung, beispielsweise die optimale G-Funktion, herum vorab festgelegt werden. Fällt nun die bei der Prüfung ermittelte tatsächliche Verteilung der Umschaltpunkte bzw. die Verteilung der Abstände der nächsten Nachbarn in diesen Toleranzbereich, so reicht die Qualität der festgelegten Verteilung der Umschaltpunkte aus. Andernfalls, wenn die Kurve außerhalb der vorgegebenen Toleranzbereiche um die vorgegebene Soll-Verteilungsfunktion liegt, ist die Qualität nicht ausreichend. Dementsprechend kann eine neue Schweißtiefenkarte erzeugt werden und deren Verteilung der zufälligen Punkte wieder mit der Soll-Funktion, vorzugsweise einer G-Funktion, verglichen werden, um iterativ zu einer optimalen Verteilung der Umschaltpunkte zu kommen.

Eine Testfunktion zum Vergleich mit der Soll-Verteilung, beispielsweise der optimalen G-Funktion, kann wie folgt aus der Umschaltkarte ermittelt werden:

Zunächst wird ein beliebiger erster Umschaltpunkt aus der Umschaltkarte ausgewählt. Für diesen werden alle Abstände zu allen anderen Umschaltpunkten in der Umschaltkarte ermittelt und der kürzeste Abstand in einer Abstandsliste gespeichert. Dies wird nach und nach für alle Umschaltpunkte durchgeführt. Wenn für alle Umschaltpunkte jeweils der Abstand zum nächstliegenden Umschaltpunkt ermittelt wurde, wird die Abstandsliste nach Abständen sortiert und die Duplikate werden entfernt. Die so erhaltene Abstandsliste bildet letztlich die gesuchte Testfunktion, die z. B. zur anschaulichen Darstellung der Qualität einfach gemeinsam mit der mit einem Toleranzbereich versehenen idealen Soll-Verteilungsfunktion geplottet werden kann, um sie zu vergleichen. Dies wird später noch anhand eines Beispiels verdeutlicht. Aber auch ein rein automatischer Vergleich ohne einen Ausdruck ist natürlich möglich.

Sofern die Umschaltpunkte erst online, während des Bauprozesses, erstellt werden, kann mittels einer Erstellung und Überprüfung einer Schweißtiefenkarte zumindest im Nachhinein eine Qualitätsprüfung erfolgen, auf deren Basis zum Beispiel ein Bauteil ausgesondert oder ihm eine Nutzungseinschränkung auferlegt wird.

In jedem Fall kann also mit Hilfe der Erfindung nicht nur die Qualität der Bauteile verbessert werden, sondern es kann auch ein erheblicher Qualitätssicherungsvorteil erreicht werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:

Figur 1 eine schematische, teilweise im Schnitt dargestellte Ansicht eines Ausführungsbeispiels einer Vorrichtung zur additiven Fertigung mit einer erfindungsgemäßen Steuerdatenerzeugungseinrichtung,

Figur 2 schematische Prinzip-Darstellungen des Verlaufs der Einschweißtiefe über mehreren nominelle Schichtdicken hinweg entlang eines Hatch (obere Grafik beim Fade-In, mittlere Grafik in einem mittleren Hatch-Bereich, untere Grafik beim Fade-Out) bei einer Vorgehensweise nach dem Stand der Technik,

Figur 3 ein Flussdiagramm eines möglichen Verfahrensablaufs eines Ausführungsbeispiels eines erfindungsgemäßen Verfahrens zur Generierung von Steuerdaten für eine Vorrichtung zur additiven Fertigung eines Bauteils,

Figur 4 schematische Prinzip-Darstellungen des Verlaufs der Einschweißtiefe über mehreren nominelle Schichtdicken hinweg entlang eines Hatch (obere Grafik beim Fade-In, mittlere Grafik in einem mittleren Hatch-Bereich, untere Grafik beim Fade-Out) ähnlich Figur 2, jedoch nun bei einer Vorgehensweise nach einem Ausführungsbeispiel der Erfindung,

Figur 5 eine schematische Darstellung von Verfestigungsbahnen (hier wieder nebeneinanderliegenden Hatches) in einem Ausschnitt einer Bauteilschicht mit auf den Hatches eingezeichneten, statistisch verteilten Umschaltpunkten und Weglängen bis zu einer Rückschaltung gemäß einem ersten Ausführungsbeispiel,

Figur 6 einen vergrößerten Ausschnitt des in Figur 5 gezeigten Baufeld-Teilbereichs,

Figur 7 eine schematische Darstellung von Verfestigungsbahnen wie in Figur 5, jedoch nun gemäß einem zweiten Ausführungsbeispiel,

Figur 8 einen vergrößerten Ausschnitt des in Figur 7 gezeigten Baufeld-Teilbereichs,

Figur 9 eine schematische Darstellung eines Querschnittes durch ein Bauteil bzw. eine Draufsicht auf eine Bauteilschicht mit einem Innenbereich und einem Außenbereich.

Die nachfolgenden Ausführungsbeispiele werden mit Bezug auf eine Vorrichtung 1 zur additiven Fertigung von Bauteilen in Form einer Lasersinter- oder Laserschmelzvorrichtung 1 beschrieben, wobei explizit noch einmal darauf hingewiesen ist, dass die Erfindung nicht auf Lasersinter- oder Laserschmelzvorrichtungen beschränkt ist. Die Vorrichtung wird im Folgenden - ohne eine Beschränkung der Allgemeinheit - daher kurz als "Lasersintervorrichtung" 1 bezeichnet.

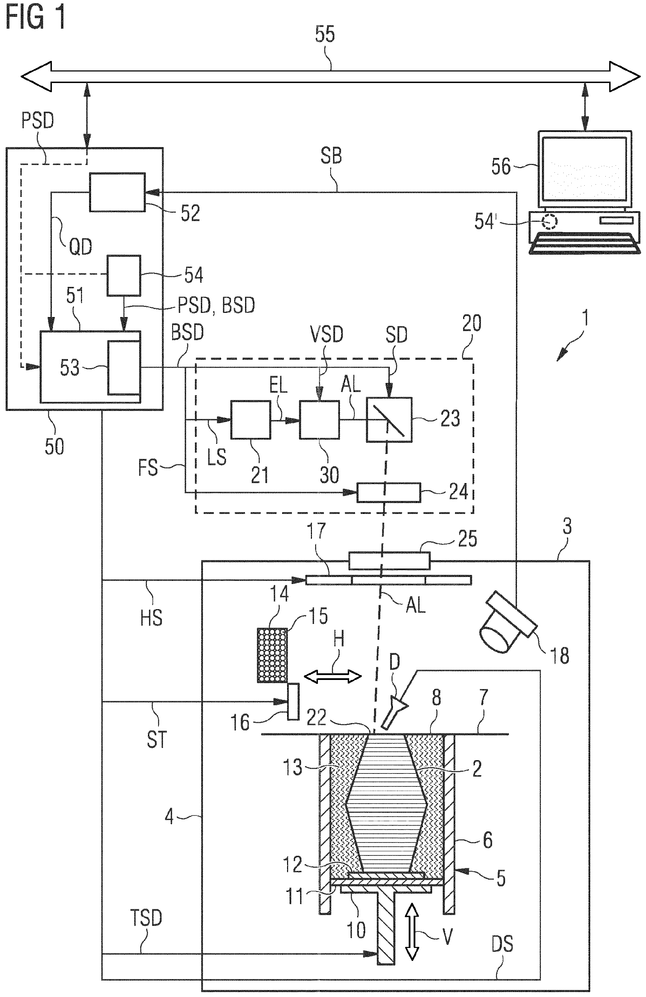

Eine solche Lasersintervorrichtung 1 ist schematisch in Figur 1 gezeigt. Die Vorrichtung weist eine Prozesskammer 3 bzw. einen Prozessraum 3 mit einer Kammerwandung 4 auf, in der im Wesentlichen der Fertigungsprozess abläuft. In der Prozesskammer 3 befindet sich ein nach oben offener Behälter 5 mit einer Behälterwandung 6. Die obere Öffnung des Behälters 5 bildet die jeweils aktuelle Arbeitsebene 7. Der innerhalb der Öffnung des Behälters 5 liegende Bereich dieser Arbeitsebene 7 kann zum Aufbau des Objekts 2 verwendet werden und wird daher als Baufeld 8 bezeichnet.

Der Behälter 5 weist eine in einer vertikalen Richtung V bewegliche Grundplatte 11 auf, die auf einem Träger 10 angeordnet ist. Diese Grundplatte 11 schließt den Behälter 5 nach unten ab und bildet damit dessen Boden. Die Grundplatte 11 kann integral mit dem Träger 10 gebildet sein, sie kann aber auch eine getrennt von dem Träger 10 gebildete Platte sein und an dem Träger 10 befestigt oder auf diesem einfach gelagert sein. Je nach Art des konkreten Aufbaumaterials, also beispielsweise des verwendeten Pulvers, und des Fertigungsprozesses kann auf der Grundplatte 11 eine Bauplattform 12 als Bauunterlage angebracht sein, auf der das Objekt 2 aufgebaut wird. Grundsätzlich kann das Objekt 2 aber auch auf der Grundplatte 11 selber aufgebaut werden, die dann die Bauunterlage bildet.

Der grundsätzliche Aufbau des Objekts 2 erfolgt, indem eine Schicht Aufbaumaterial 13 zunächst auf die Bauplattform 12 aufgebracht wird, dann - wie später erläutert - mit einem Laserstrahl AL als Energiestrahl an den Punkten, welche Teile des zu fertigenden Objekts 2 bilden sollen, das Aufbaumaterial 13 selektiv verfestigt wird, dann mit Hilfe des Trägers 10 die Grundplatte 11, somit die Bauplattform 12 abgesenkt wird und eine neue Schicht des Aufbaumaterials 13 aufgetragen und selektiv verfestigt wird usw. In Figur 1 ist das in dem Behälter auf der Bauplattform 12 aufgebaute Objekt 2 unterhalb der Arbeitsebene 7 in einem Zwischenzustand dargestellt. Es weist bereits mehrere verfestigte Schichten auf, umgeben von unverfestigt gebliebenem Aufbaumaterial 13. Als Aufbaumaterial 13 können verschiedene Materialien verwendet werden, vorzugsweise Pulver, insbesondere Metallpulver, Kunststoffpulver, Keramikpulver, Sand, gefüllte oder gemischte Pulver oder auch pastöse Materialien.

Frisches Aufbaumaterial 15 befindet sich in einem Vorratsbehälter 14 der Lasersintervorrichtung 1. Mit Hilfe eines in einer horizontalen Richtung H bewegbaren Beschichters 16 kann das Aufbaumaterial in der Arbeitsebene 7 bzw. innerhalb des Baufelds 8 in Form einer dünnen Schicht aufgebracht werden.

Optional befindet sich in der Prozesskammer 3 eine zusätzliche Strahlungsheizung 17. Diese kann zum Beheizen des aufgebrachten Aufbaumaterials 13 dienen, so dass die für die selektive Verfestigung genutzte Bestrahlungseinrichtung nicht zu viel Energie einbringen muss. Das heißt, es kann beispielsweise mit Hilfe der Strahlungsheizung 17 schon eine Menge an Grundenergie in das Aufbaumaterial 13 eingebracht werden, welche natürlich noch unterhalb der notwendigen Energie ist, bei der das Aufbaumaterial 13 verschmilzt oder sogar sintert. Als Strahlungsheizung 17 kann beispielsweise ein Infrarotstrahler genutzt werden.

Zum selektiven Verfestigen weist die Lasersintervorrichtung 1 eine Bestrahlungsvorrichtung 20 bzw. konkret Belichtungsvorrichtung 20 mit einem Laser 21 auf. Dieser Laser 21 erzeugt einen Laserstrahl EL, der zunächst einer Strahlformungseinrichtung 30 (als Eingangs-Energiestrahl EL bzw. Eingangs-Laserstrahl EL) zugeführt wird. Die Strahlformungseinrichtung 30 kann wie oben bereits beschrieben dazu genutzt werden, um die Intensitätsverteilung, d. h. das Intensitätsprofil, des Energiestrahls zu modifizieren, zum Beispiel auch, um ein Gaußprofil einem Top-Hat-Profil zu überlagern. Hierzu kann die Strahlformungseinrichtung 30 mit geeigneten Intensitätsverteilungssteuerdaten VSD angesteuert werden.

Eine bevorzugte Strahlformungseinrichtung 30 kann hierzu z. B. eingangsseitig zunächst einen Strahlteiler in Form eines Dünnschicht-Polarisators aufweisen, welcher den Eingangs-Laserstrahls EL in zwei linear polarisierte Teilstrahlen aufteilt. Jeder dieser linear polarisierten Teilstrahlen kann zu einem eigenen Strahlformungselement geleitet werden. Diese Strahlformungselemente sind für die eigentliche Strahlformung zuständig. Es kann sich hierbei z. B. um sogenannte passive DOEs, (DOE = Diffractive Optical Element) handeln, die reflektiv arbeiten und die Wellenfront des einfallenden Teilstrahls durch lokale Modulation von Phase und/oder Amplitude verändern. Ein Beispiel hierfür wären LCoS-Micro-Displays (LCoS = Liquid Crystal on Silicon), die mit den entsprechenden Intensitätsverteilungssteuerdaten VSD angesteuert werden können, die von der noch nachfolgend beschriebenen Bestrahlungssteuerschnittstelle 53 der Steuereinrichtung 50 der Lasersintervorrichtung 1 geliefert werden können.

Über eine nachfolgende Umlenkvorrichtung 23 (Scanner 23) wird der optional von der Strahlformungseinrichtung modifizierte (Ausgangs-) Energiestrahl bzw. Laserstrahl AL dann umgelenkt, um so die gemäß der Belichtungsstrategie vorgesehenen Verfestigungsbahnen (d. h. Belichtungspfade oder Spuren) in der jeweils selektiv zu verfestigenden Schicht abzufahren und selektiv die Energie einzubringen. D. h. mittels des Scanners 23 wird die Auftrefffläche 22 des Energiestrahls AL auf dem Baufeld 8 bewegt, wobei sich der aktuelle Bewegungsvektor bzw. die Bewegungsrichtung (Scanrichtung) der Auftrefffläche 22 auf dem Baufeld 8 häufig und schnell ändern kann. Dabei wird dieser Laserstrahl AL durch eine Fokussiereinrichtung 24 auf die Arbeitsebene 7 in geeigneter Weise fokussiert. Die Bestrahlungsvorrichtung 20 befindet sich hier vorzugsweise außerhalb der Prozesskammer 3, und der Laserstrahl AL wird über ein an der Oberseite der Prozesskammer 3 in der Kammerwandung 4 angebrachtes Einkoppelfenster 25 in die Prozesskammer 3 geleitet.

Die Bestrahlungsvorrichtung 20 kann beispielsweise nicht nur einen, sondern mehrere Laser umfassen. Vorzugsweise kann es sich hierbei um Gas- oder Festkörperlaser oder jede andere Art von Laser wie z. B. Laserdioden handeln, insbesondere VCSEL (Vertical Cavity Surface Emitting Laser) oder VECSEL (Vertical External Cavity Surface Emitting Laser) oder eine Zeile dieser Laser. Ganz besonders bevorzugt können im Rahmen der Erfindung ein oder mehrere unpolarisierte Single-Mode-Laser, z. B. ein 3 kW-Faserlaser mit einer Wellenlänge von 1070 nm, eingesetzt werden.

Bei dem dargestellten Ausführungsbeispiel ist in der Prozesskammer 3 eine optionale, vorzugsweise verfahrbare und/oder verstellbare Düse D angeordnet, welche dazu genutzt werden kann, lokal ein Gas oder eine Gasmischung in den Bereich der Auftrefffläche des Laserstrahls AL auf dem Baufeld 8 zuzuführen, um dadurch die Soll-Einschweißtiefe zu beeinflussen.

Die Lasersintervorrichtung 1 enthält weiterhin eine Sensoranordnung 18, welche dazu geeignet ist, eine während des Auftreffens des Laserstrahls AL auf das Aufbaumaterial in der Arbeitsebene emittierte Prozessstrahlung zu erfassen. Diese Sensoranordnung 18 arbeitet dabei ortsaufgelöst, d. h. sie ist in der Lage, eine Art Emissionsbild der jeweiligen Schicht zu erfassen. Vorzugsweise wird als Sensoranordnung 18 ein Bildsensor bzw. eine Kamera 18 verwendet, welche im Bereich der emittierten Strahlung ausreichend sensitiv ist. Alternativ oder zusätzlich könnten auch ein oder mehrere Sensoren zur Erfassung einer optischen und/oder thermischen Prozessstrahlung genutzt werden, z. B. Photodioden, die die von einem Schmelzbad unter auftreffendem Laserstrahl AL emittierte elektromagnetische Strahlung erfassen, oder Temperaturfühler zum Erfassen einer emittierten thermischen Strahlung (sogenanntes Meltpool-Monitoring). Eine Zuordnung des Signals eines selbst nicht ortsauflösenden Sensors zu den Koordinaten wäre möglich, indem die Koordinaten, die für die Ansteuerung des Laserstrahls genutzt werden, dem Sensorsignal jeweils zeitlich zugeordnet werden. In Figur 1 ist die Sensoranordnung 18 innerhalb der Prozesskammer 3 angeordnet. Sie könnte sich aber auch außerhalb der Prozesskammer 3 befinden und die Prozessstrahlung dann durch ein weiteres Fenster in der Prozesskammer 3 erfassen.

Die von der Sensoranordnung 18 erfassten Signale können als Prozessraum-Sensordatensatz bzw. Schichtbild SB hier an eine Steuereinrichtung 50 der Lasersintervorrichtung 1 übergeben werden, welche auch dazu dient, die verschiedenen Komponenten der Lasersintervorrichtung 1 zur gesamten Steuerung des additiven Fertigungsprozesses anzusteuern.

Hierzu weist die Steuereinrichtung 50 eine Steuereinheit 51 auf, welche über eine Bestrahlungssteuerschnittstelle 53 die Komponenten der Bestrahlungsvorrichtung 20 ansteuert, nämlich hier an den Laser 21 Lasersteuerdaten LS übersendet, an die Strahlformungseinrichtung 30 Intensitätsverteilungssteuerdaten VSD, an die Umlenkvorrichtung 23 Scansteuerdaten SD und an die Fokussiervorrichtung 24 Fokussteuerdaten FS übersendet. Die Gesamtheit dieser Daten kann als Belichtungssteuerdaten BSD bezeichnet werden.

Die Steuereinheit 51 steuert auch mittels geeigneter Heizungssteuerdaten HS die Strahlungsheizung 17 an, mittels Beschichtungssteuerdaten ST den Beschichter 16 und mittels Trägersteuerdaten TSD die Bewegung des Trägers 10 und steuert somit die Schichtdicke. Weiterhin steuert die Steuereinheit 51 auch die Düse D mit Hilfe von Düsensteuerdaten DS. Zusätzlich weist die Steuereinrichtung 50 hier eine Qualitätsdaten-Ermittlungseinrichtung 52 auf, die den Prozessraum-Sensordatensatz SB erhält und darauf basierend Qualitätsdaten QD ermittelt, die beispielsweise an die Steuereinheit 51 übergeben werden können, um regelnd in den additiven Fertigungsprozess eingreifen zu können.

Die Steuereinrichtung 50 ist, hier z. B. über einen Bus 55 oder eine andere Datenverbindung, mit einem Terminal 56 mit einem Display oder dergleichen gekoppelt. Über dieses Terminal kann ein Bediener die Steuereinrichtung 50 und somit die gesamte Lasersintervorrichtung 1 steuern, z. B. durch Übermittlung von Prozesssteuerdaten PSD.

Um den Produktionsprozess zu optimieren, werden mittels einer Steuerdatenerzeugungsvorrichtung 54, 54' in der erfindungsgemäßen Weise die Steuerdaten so generiert bzw. so modifiziert, dass die Ansteuerung der Vorrichtung 1 zumindest zeitweise in einem erfindungsgemäßen Verzahnungsmodus erfolgt, so dass bei der Bewegung des Energiestrahls AL über das Baufeld 8 an mehreren statistisch verteilten Umschaltpunkten P eine ortsabhängige Soll-Einschweißtiefe des Laserstrahls bewusst umgeschaltet wird, wie dies oben bereits erläutert wurde. Nachfolgend werden hierfür auch noch einmal konkretere Ausführungsvarianten vorgestellt.

Die Steuerdatenerzeugungsvorrichtung 54 kann beispielsweise Teil der Steuereinrichtung 50 sein und dort beispielsweise in Form von Softwarekomponenten realisiert sein. Eine solche in die Steuereinrichtung 50 integrierte Steuerdatenerzeugungsvorrichtung 54 kann beispielsweise die Prozesssteuerdaten PSD übernehmen und entsprechend so modifizieren, dass die Ansteuerung der Vorrichtung 1 zumindest zeitweise in dem erfindungsgemäßen Verzahnungsmodus erfolgt, und die entsprechend modifizierten Steuerdaten PSD dann an die Steuereinheit 51 weiter übermitteln. Die modifizierten Steuerdaten PSD umfassen dabei insbesondere modifizierte Belichtungssteuerdaten BSD, aber ggf. auch noch andere modifizierte Steuerdaten, wie beispielsweise geänderte Beschichtungssteuerdaten ST oder Trägersteuerdaten TSD, um eine passende Schichtdicke zu wählen, oder geeignete Düsensteuerdaten DS, um durch die lokale Begasung die Einschweißtiefe einzustellen. Alternativ könnten in der Steuerdatenerzeugungsvorrichtung 54 aber auch nur die Belichtungssteuerdaten BSD modifiziert werden und an die Steuereinheit 51 übergeben werden, so dass die Bestrahlungssteuerschnittstelle 53 mit den modifizierten Belichtungssteuerdaten BSD arbeitet.

Bei einer besonders bevorzugten Variante ist die Steuerdatenerzeugungsvorrichtung 54' auf einer externen Rechnereinheit, beispielsweise hier dem Terminal 56, realisiert und liefert vorab bereits Prozesssteuerdaten PSD mit entsprechend passenden Belichtungssteuerdaten BSD, mit denen die Vorrichtung 1 so angesteuert wird, dass in den gewünschten Bereichen des Bauteils der beabsichtige Verzahnungsmodus erreicht wird. In diesem Fall könnte auf die in der Steuereinrichtung 50 hier vorhandene interne Steuerdatenerzeugungsvorrichtung 54 auch verzichtet werden.

Wie bereits erwähnt können die durch die Steuerdatenerzeugungsvorrichtung 54, 54' erzeugten bzw. modifizierten Prozesssteuerdaten PSD, insbesondere Belichtungssteuerdaten BSD, auch als Sollwerte angesehen werden, die dann in der Steuereinheit 51 für einen Regelprozess verwendet werden, wobei z. B. (als eine Möglichkeit) die Qualitätsdaten QD als Ist-Werte mit eingehen können.

Es wird an dieser Stelle auch noch einmal darauf hingewiesen, dass die vorliegende Erfindung nicht auf eine solche Lasersintervorrichtung 1 beschränkt ist. Sie kann auf andere Verfahren zum generativen bzw. additiven Herstellen eines dreidimensionalen Objekts durch schichtweises Aufbringen und selektives Verfestigen eines Aufbaumaterials angewendet werden, wobei ein Energiestrahl zum Verfestigen auf das zu verfestigende Aufbaumaterial abgegeben wird. Dementsprechend kann auch die Bestrahlungsvorrichtung nicht nur, wie hier beschrieben, ein Laser sein, sondern es könnte jede Einrichtung verwendet werden, mit der Energie als Wellen- oder Teilchenstrahlung selektiv auf bzw. in das Aufbaumaterial gebracht werden kann. Beispielsweise könnte anstelle eines Lasers eine andere Lichtquelle, ein Elektronenstrahl etc. verwendet werden.

Auch wenn in Figur 1 nur ein einzelnes Objekt 2 bzw. Bauteil 2 dargestellt wird, ist es möglich und in der Regel auch üblich, mehrere Objekte in der Prozesskammer 3 bzw. im Behälter 5 parallel herzustellen. Dazu wird das Aufbaumaterial schichtweise an Stellen, die den Querschnitten der Objekte in der jeweiligen Schicht entsprechen, durch den Energiestrahl abgetastet.

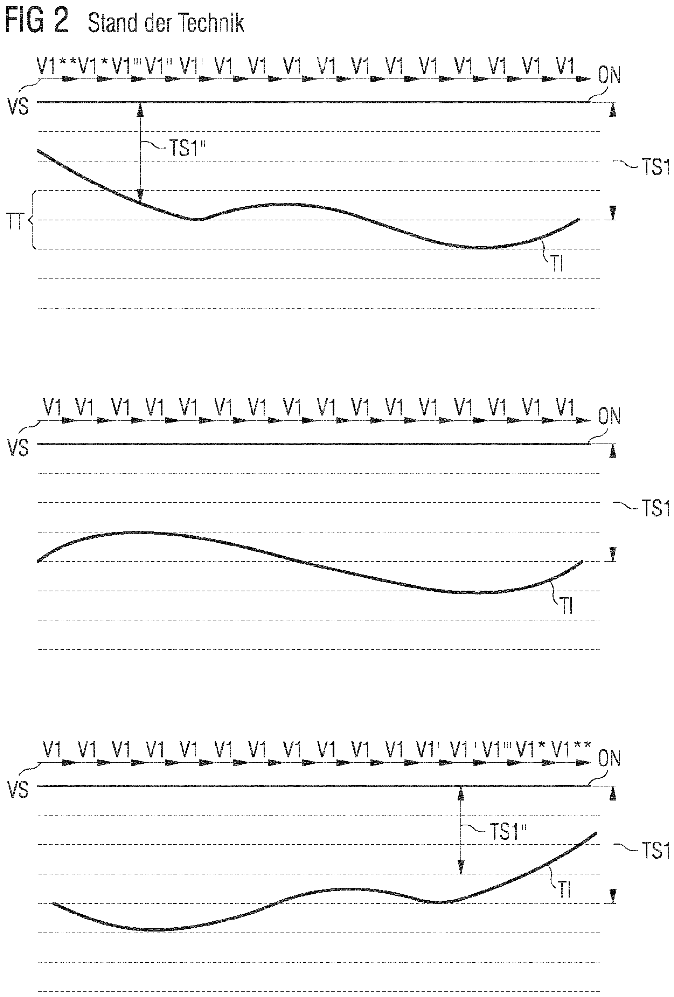

Um das Prinzip des erfindungsgemäßen Verzahnungsmodus besser zu erläutern, wird zunächst in Figur 2 anhand dreier schematischer Schnittdarstellungen durch einen kleinen Bereich eines oberen Teils eines aktuell herzustellenden Bauteils der Verlauf der Ist-Einschweißtiefe TI entlang eines einzelnen Hatches (als aktuelle Verfestigungsbahn) über mehrere Materialschichten (nominelle Schichtdicken) bei einer Vorgehensweise nach dem Stand der Technik gezeigt.

Oberhalb der die dargestellten Materialschichten umfassenden Schichtanordnung, welche oben an einer "nominellen Oberfläche" ON endet, ist jeweils über den Schnittdarstellungen eine Vektorspur VS gezeigt, welche mehrere sogenannte Mikrovektoren V1\*\*, V1\*, V1‴, V1", V1', V1 umfasst. Die Mikrovektoren repräsentieren kleinste Steuerschritte und können als Zeitangaben betrachtet werden. Als "nominelle Oberfläche" wird hier die im Pulverbettverfahren nach oben weisende verfestigte Querschnittoberfläche des Bauteils gesehen, d. h. die in z-Richtung oberste Schicht des sich in der Fertigung befindenden Bauteils, die aktuell verfestigt ist. Dabei wird ggf. in z-Richtung ein mittlerer Höhenwert angenommen, wenn die verfestigte Oberfläche zu starke Irregularitäten zeigt, wie z. B. übermäßige Rauhigkeit. Diese nominelle Oberfläche unterscheidet sich also von der Arbeitsebene (bzw. der Beschichterebene, da die Arbeitsebene z. B. durch die Beschichterklinge definiert wird) insoweit, als dass bei der Arbeitsebene die aktuell zu verfestigende Pulverschicht hinzugezählt wird.

In der obersten Schnittdarstellung in Figur 2 ist eine Situation zu Beginn eines Hatches gezeigt. In einem Fade-in-Bereich wird in einer Anlauframpe zunächst die Soll-Einschweißtiefe (welche im Folgenden auch kürzer als "Zieltiefe" bezeichnet wird) unter der nominellen Oberfläche ON des herzustellenden Bauteils nach und nach kontinuierlich erhöht. Die Mikrovektoren V1\*\*, V1\*, V1‴, V1", V1' repräsentieren dementsprechend Mikrovektoren mit unterschiedlichen Standard-Einstellungen des Energiestrahls bzw. Laserstrahls für unterschiedliche Zieltiefen, die bei den Einstellungswerten des jeweiligen Mikrovektors V1\*\*, V1\*, V1‴, V1", V1' zu erreichen sind. Beispielhaft ist in der Figur eine bestimmte erste Zieltiefe TS1" eingezeichnet, die durch bzw. nach dem Mikrovektor V1" erreicht wird. Die unterschiedlichen Zieltiefen können z. B. durch die Einstellung unterschiedlicher Laserleistungen, welches im Folgenden als einfaches repräsentati-

**EP 4 196 856 B1**

ves Beispiel angenommen wird, eingestellt werden. Die Zieltiefe kann aber, wie bereits mehrfach erwähnt, auch durch eine Einstellung einer Vielzahl weiterer Parameter oder Parameterkombinationen vorgegeben werden. Im dargestellten Fall nimmt z. B. die Laserleistung in der Reihenfolge der Mikrovektoren V1\*\*, V1\*, V1‴, V1", V1' mit jedem der Mikrovektoren V1\*\*, V1\*, V1‴, V1", V1' zu.

Die allmähliche, relativ langsame Steigerung der Zieltiefe im Anlauframpenbereich nach dem Stand der Technik dient dazu, eine Spratzerbildung am Anfang eines Hatches zu vermeiden. Nach dem Ende des Mikrovektors V1' wird schließlich bei den Mikrovektoren V1 (mit einer Standard-Einstellung des Laserstrahls für den mittleren Abschnitt eines Hatches außerhalb des Fade-In-Bereichs und des Fade-Out-Bereichs) die Zieltiefe TS1 erreicht.

In diesem Bereich während einer mittleren Phase bzw. eines mittleren Teils des Hatches wird die erste Zieltiefe bzw. Standard-Soll-Einschweißtiefe TS1 bei der üblichen Vorgehensweise nach dem Stand der Technik lange beibehalten. Diese Prozesssituation ist in der mittleren Schnittdarstellung gezeigt. Die Ist-Einschweißtiefe TI schwankt dabei mit einer Schwankungsbreite TT von ca. zwei Materialschichten leicht um die fest eingestellte Zieltiefe TS1. Diese Schwankungsbreite TT ist deutlich geringer als die Zieltiefe TS1. Die gezeigten Schwankungen stellen - in der Regel periodische - langwellige unkontrollierte und unbeabsichtigte Prozessschwankungen dar

In der unteren Schnittdarstellung wird eine Situation am Ende eines Hatches gezeigt. In dem dort vorgesehenen Fade-Out-Bereich wird die Zieltiefe nach dem Stand der Technik allmählich relativ langsam wieder reduziert, d. h. bei den Mikrovektoren V1', V1", V1‴, V1\*, V1\*\* erfolgt (in umgekehrter Reihenfolge wie im Fade-In-Bereich) eine allmähliche Reduktion der ersten Zieltiefe. Auch hier ist aber beispielhaft wieder nur eine bestimmte ortsabhängige erste Zieltiefe TS1" eingezeichnet, die durch bzw. nach dem Mikrovektor V1" erreicht wird. Durch die so erzeugte Auslauframpe wird eine Verringerung einer Porosität am Ende eines Hatches bewirkt.

Es wird der Vollständigkeit halber darauf hingewiesen, dass auch im Fade-in-Bereich und Fade-out-Bereich die leichten unbeabsichtigten langwelligeren Schwankungen auftreten können. Die in den Schnittdarstellungen grob schematisch gezeigten, auch im Stand der Technik unbeabsichtigt auftretenden leichten Schwankungen der tatsächlichen Ist-Einschweißtiefe um die gewünschte erste Soll-Einschweißtiefe bzw. Zieltiefe herum sind aber zu gering, um eine gewünschte Verzahnung an den Schichtgrenzen zu bilden und so ein wirksames Hindernis für einen sich in dem Bauteil ausbreitenden Riss darzustellen.

Daher wird erfindungsgemäß ein spezieller Verzahnungsmodus genutzt.

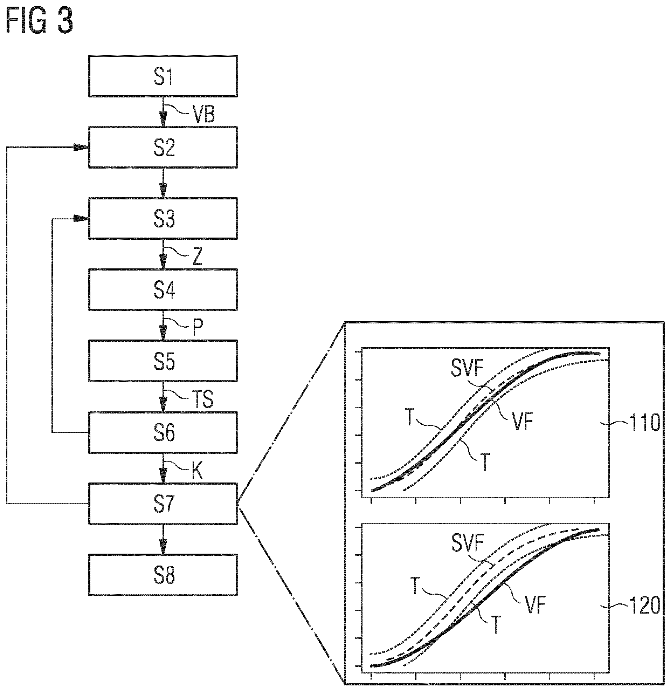

In Figur 3 ist hierzu ein Flussdiagramm eines möglichen Verfahrensablaufs eines Ausführungsbeispiels eines erfindungsgemäßen Verfahrens zur Generierung von Steuerdaten für eine Vorrichtung zur additiven Fertigung eines Bauteils beschrieben.

Im Schritt S1 werden zunächst, z. B. auf Basis von digitalen 3D-Konstruktionsdaten, Verfestigungsbahnen VB für eine Schicht eines dreidimensionalen Objekts berechnet. Anschließend wird im Schritt S2 eine Bausimulation eines virtuellen additiven Fertigungsprozesses gestartet, in welchem der Energiestrahl bzw. Laser virtuell alle Verfestigungsbahnen VB abfährt. Der Prozess kann z. B. mit einer ortabhängigen ersten Soll-Einschweißtiefe (bzw. ersten Zieltiefe) beginnen, welche für den jeweiligen Ort als erste Zieltiefe festgelegt ist.

Um im Laufe des Prozesses die statistische Verzahnung zu erreichen, wird im Schritt S3 dann zunächst ein Zufallsgenerator gestartet, um den nächsten Umschaltpunkt bzw. zunächst den nächsten Umschaltzeitpunkt Z der Anpassung der Bestrahlungsparameterwerte auf eine ortabhängige neue, zweite Soll-Einschweißtiefe (bzw. zweite Zieltiefe) innerhalb der Verfestigungsbahn zu finden. Dies kann z. B. - sofern eine statistische Verteilung der Umschaltpunkte P nach einer homogenen Poisson-Verteilung gewünscht ist - mithilfe der oben erläuterten Gleichung (1) erfolgen, indem auf Basis der (quasi) Zufallszahl jeweils das Zeitintervall dt bis zum nächsten Umschaltzeitpunkt Z ermittelt wird.

Im Schritt S4 wird auf Basis des zuvor berechneten Umschaltzeitpunkts Z ein Umschaltpunkt P in der jeweiligen Verfestigungsbahn VB ermittelt, an der statt der vorgesehenen Mikrovektoren (mit den Werten für die eigentlich, im Stand der Technik, dort vorgesehene erste ortsabhängige Zieltiefe) neue Mikrovektoren (mit den Werten für die zweite ortsabhängige Zieltiefe) eingefügt werden bzw. an der eine Veränderung zumindest eines Bestrahlungsparameterwerts für eine definierte Anzahl von Mikrovektoren erfolgen soll, berechnet.

Im Schritt S5 wird dann ein neuer Bestrahlungsparameterwert für die neue (zweite) Soll-Einschweißtiefe TS am Umschaltpunkt P gewählt, zum Beispiel die Laserleistung, für die zweite ortsabhängige Zieltiefe. Der Einfachheit halber wird für dieses Ausführungsbeispiel davon ausgegangen, dass immer zwischen einer am jeweiligen Ort an sich vorgegebenen (d. h. ortsabhängigen) ersten Standard-Soll-Einschweißtiefe (bzw. Standard-Zieltiefe) und einer ortsabhängige zweiten Sonder-Soll-Einschweißtiefe (bzw. Sonder-Zieltiefe) hin- und hergeschaltet wird, wobei an einem zufälligen Umschaltpunkt auf die Sonder-Zieltiefe geschaltet wird und in einem definierten zeitlichen Abstand von z. B. einigen wenigen Mikrovektoren nach dem Umschaltpunkt auf die erste Standard-Zieltiefe (zurück-) geschaltet wird.

Die Anzahl von Mikrovektoren, während derer mit der zweiten ortsabhängigen Zieltiefe anstelle der ersten ortsabhängigen Zieltiefe gearbeitet wird, kann zum Beispiel vordefiniert sein, insbesondere materialabhängig. Sie kann davon abhängen, wie schnell eine Soll-Einschweißtiefe TS geändert werden kann.

Im Schritt S6 wird dann geprüft, ob der virtuelle Bestrahlungsprozess für die Bauteilschicht komplett ist. Falls nicht, wird zum Schritt S3 zurückgekehrt. Ansonsten wird aus der zufallsbedingten Verteilung der Umschaltpunkte P eine

17

Umschaltkarte K bzw. Schweißtiefenkarte K erstellt und es wird zum Schritt S7 übergegangen.

Im Schritt S7 wird geprüft, wie gut die erhaltene Verteilung der Umschaltpunkte P in der Fläche der gewünschten statistischen Verteilung entspricht, d. h. ob zum Beispiel - wie oben schon erläutert - die Verteilung dieser Umschaltpunkte innerhalb eines Toleranzbandes um die ideale Nearest Neighbour Distance function G liegt.

In Figur 3 wird rechts von dem Flussdiagramm ein solcher Test in zwei Schaubildern 110, 120 veranschaulicht. In einem ersten. oberen Schaubild 110 liegt eine mit durchgezogenem Strich gezeichnete Testfunktion VF (welche als Nearest Neighbour Distance function G aus der Umschaltkarte wie nachfolgend erläutert berechnet wurde) innerhalb eines punktiert gezeichneten Toleranzbereichs T um eine gestrichelt gezeichnete Sollverteilung SVF (hier der Verlauf der idealen G-Funktion). In diesem Fall könnte die der Testfunktion VF zugrunde liegende Umschaltkarte für einen Produktionsprozess akzeptiert werden. In dem unteren Schaubild 120 befindet sich dagegen die mit durchgezogenem Strich gezeichnete Testfunktion VF teilweise außerhalb des punktiert gezeichneten Toleranzbereichs T. In diesem Fall muss die Umschaltkarte verworfen werden. Falls diese Prüfung negativ ausfällt, wird zum Schritt S2 zurückgekehrt und letztlich eine neue Umschaltkarte erstellt. Ansonsten wird zum Schritt S8 übergegangen, in dem schließlich die angepassten Steuerdaten gespeichert und/oder einer Steuereinrichtung einer Fertigungsvorrichtung zur Verfügung gestellt werden.

Die Testfunktion VF als eine Nearest Neighbour Distance function kann wie oben erläutert aus der Umschaltkarte K ermittelt werden, indem alle Abstände zwischen allen Umschaltpunkten P in der Umschaltkarte K ermittelt werden und die jeweils kürzesten Abstände in einer Abstandsliste gespeichert werden, die dann sortiert und von Duplikaten bereinigt wird.

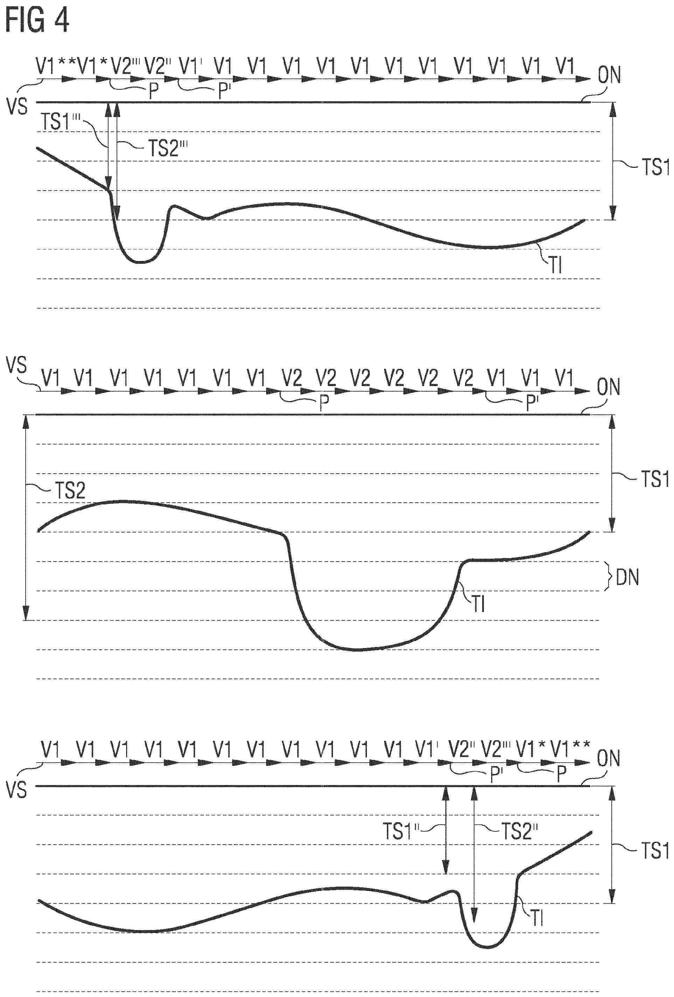

In den nächsten Figuren 4 bis 8 soll jeweils an verschiedenen Beispielen dargestellt werden, wie sich der Aufbau der Schichten im Verzahnungsmodus ändern kann.

Hierzu werden in Figur 4 analog zu der Darstellung in Figur 2 wieder schematisch drei Schnittdarstellungen dargestellt, um den Verlauf der Ist-Einschweißtiefe TI entlang eines einzelnen Hatches über mehrere Materialschichten zu zeigen, diesmal jedoch im Vergleich zu Figur 2 im Verzahnungsmodus.

Oberhalb der Schichtanordnung sind wieder die Mikrovektoren V1\*\*, V1\*, V1‴, V1", V1', V1 gezeigt, an denen - wie im Stand der Technik nach Figur 2 - der Energiestrahl so betrieben wird, dass eine erste Zieltiefe TS1, TS1" erreicht werden kann. Zusätzlich werden allerdings Mikrovektoren V2 mit erhöhter Leistung und Mikrovektoren V2‴, V2" mit erhöhter Fade-in bzw. Fade-Out-Leistung gezeigt. Die Mikrovektoren V2, V2", V2‴ mit erhöhter Leistung repräsentieren dabei Abschnitte, in denen anstelle der ersten Zieltiefe TS1, TS1" eine erhöhte zweite Soll-Einschweißtiefe bzw. zweite Zieltiefe TS2, TS2" erreicht wird. Anstelle der oder zusätzlich zu einer Leistungserhöhung kann aber die zweite Zieltiefe TS2, TS2" auch durch anderer Parameterumstellungen erreicht werden, wie bereits erläutert wurde.

In der oberen Schnittdarstellung wird wieder zunächst der Verlauf einer Schweißbahn im Fade-In-Bereich gezeigt. Diesem Prozess sind die Mikrovektoren V1\*\*, V1\* zugeordnet. Die Zieltiefe (und damit auch die Ist-Einschweißtiefe TI) nimmt im Fade-In-Bereich allmählich bis zu einem Wert TS1‴ zu. Anschließend erfolgt bei dem Mikrovektor V2‴ an einem zufällig gesetzten Umschaltpunkt P ein plötzlicher Anstieg auf eine zweite Zieltiefe TS2‴, wobei die Ist-Einschweißtief TI entsprechend schnell absinkt. Beträgt zum Beispiel die erste Zieltiefe TS1‴ maximal drei nominelle Schichtdicken, so erhöht sich die zweite Zieltiefe TS2‴ im Bereich des Hindernisses auf mehr als fünf nominelle Schichtdicken. Anschließend wird die Zieltiefe bei dem Mikrovektor V1' an einem Punkt P' (nach zwei Mikrovektoren) wieder auf eine dort an sich (ohne die erfindungsgemäße Vorgehensweise; vgl. Figur 2) vorgesehene erste Zieltiefe von etwa vier nominellen Schichtdicken reduziert und der Fade-In-Bereich wird dann bei dem Mikrovektor V1 verlassen.

In einem in der mittleren Schnittdarstellung dargestellten mittleren Bereich des Hatches wird dann wieder zunächst mit einem Energiestrahl mit einer Standard-Leistung bei einer standardmäßigen ersten Zieltiefe TS1 von vier nominellen Schichtdicken gearbeitet (wie in Figur 2). Auch hier schwankt aber die Ist-Einschweißtiefe TI natürlich langwellig zwischen drei und fünf nominellen Schichtdicken um die Zieltiefe TS1 von vier nominellen Schichtdicken.

Anders als im Stand der Technik wird hier jedoch an einem zufälligen Umschaltpunkt P entlang des Hatches, hier z. B. bei dem Mikrovektor V2, erneut abrupt in eine zweite Soll-Einschweißtiefe bzw. Zieltiefe TS2 (jetzt von sieben nominellen Schichtdicken) umgeschaltet, was dementsprechend zu einer deutlichen Anhebung der Ist-Einschweißtiefe TI führt, die sich hier sogar (aufgrund der aktuell vorhandenen Schwankungen, die einander überlagern können) auf acht nominelle Schichtdicken erstrecken kann. Nach nur sechs Mikrovektoren V2 mit der zweiten Zieltiefe TS2 wird am Punkt P' wieder auf die erste Zieltiefe TS1 zurückgeschaltet, wodurch sich die Ist-Einschweißtiefe TI relativ schnell auf fünf nominelle Schichtdicken und anschließend langsam (durch die unbeabsichtigten überlagerten Schwankungen) auf vier nominelle Schichtdicken reduziert.

In der untersten Schnittdarstellung wird ähnlich wie in Figur 2 eine Situation am Ende eines Hatches gezeigt. Bei den Mikrovektoren V1 schwankt die Ist-Einschweißtiefe TI zunächst noch langwellig um die erste dort vorgesehene Standard-Zieltiefe TS1 von vier nominellen Schichtdicken. Bei Beginn des Fade-Out-Bereichs bei dem Mikrovektor V2" wird hier erneut ein Hindernis erzeugt, indem zunächst die Verfestigungstiefe am Umschaltpunkt P (anstelle der eigentlich dort vorgesehenen ersten Zieltiefe TS1") bis zu einem nachfolgenden Punkt P' auf eine dort mögliche zweite Zieltiefe TS2" von viereinhalb nominellen Schichtdicken angehoben wird, wodurch die Ist-Einschweißtiefe TI hier auf über fünf nominelle Schichtdicken kurzfristig abrupt absinkt und wieder ansteigt. Am Punkt P' wird nach dem zweiten Mikrovektor V2‴ nach dem Umschaltpunkt P die Zieltiefe wieder schnell reduziert.

Durch die mit dem bewussten, relativ schnellen Umschalten der Zieltiefe einhergehende abrupte Änderung der Ist-Einschweißtiefe TI wird in allen Bereichen jeweils ein effektives Hindernis für einen möglichen Riss in der Schichtanordnung gebildet.

Die kurzfristigen Änderungen der Zieltiefe zur Hindernisbildung und damit die Ausdehnung der Hindernisse liegt etwa bei 6 bis 10 Mikrovektoren, also z. B. 60 bis 70 $\mu$m, wogegen zum Beispiel die Länge der Fade-In-Bereiche und Fade-Out-Bereiche bei etwa 5 bis 100 Mikrovektoren liegen und die Länge eines vollständigen Hatches ca. 100 bis 1000 Mikrovektoren (auf einer Länge von z. B. 10 mm) umfassen kann. Es wird an dieser Stelle darauf hingewiesen, dass die verschiedenen Mikrovektoren im Fade-In-Bereich, im mittleren Bereich und im Fade-Out-Bereich jeweils eine Mehrzahl von Mikrovektoren desselben Typs darstellen können und nur aus Platzgründen hinsichtlich der Anzahl stark reduziert sind.

Ebenso gibt es entlang eines Hatches in der Regel eine erheblich höhere Anzahl an zufällig bzw. statistisch verteilten Umschaltpunkten P, auch wenn natürlich nicht ausgeschlossen ist, dass in einem Hatch nur weniger Umschaltpunkte liegen, zum Beispiel im Extremfall nur ein einziger Umschaltpunkt oder sogar auch mal gar kein Umschaltpunkt. Die Häufigkeit hängt von der Intensität I (vgl. oben Gleichung (1) für die Poisson-Verteilung) der Wahrscheinlichkeitsverteilung ab.

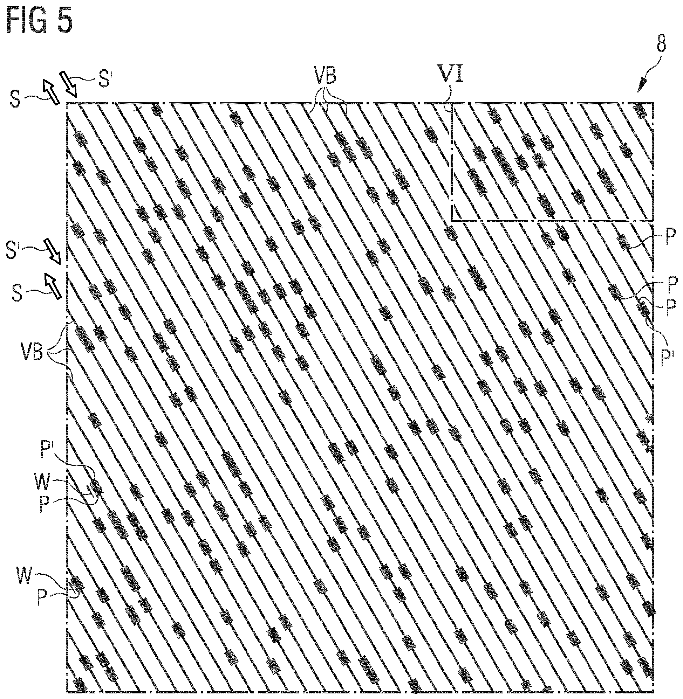

Um dies zu verdeutlichen, wird in Figur 5 ein vergrößerter Ausschnitt aus einem Baufeld 8 von oben mit Verfestigungsbahnen VB, hier einer Vielzahl von Hatches VB, schematisch dargestellt.

Die Hatches verlaufen jeweils in einer Scanrichtung S bzw. S'. Wenn der Prozess am Rand eines Arbeitsbereichs, beispielsweise einer Spur, welche aus den Hatches zusammengesetzt wird, angekommen ist, wird die Scanrichtung S bzw. S' umgekehrt und es wird auf einen parallel zu dem vorhergehenden Hatch VB verlaufenden benachbarten Hatch VB gewechselt.

Eingezeichnet sind hier die zufällig gesetzten Umschaltpunkte P, an denen jeweils von einer ersten Zieltiefe auf eine zweite Zieltiefe umgeschaltet wird, mit einer schematischen Darstellung der Weglängen W von hier 10 Mikrovektoren, nach denen nach dem Umschaltpunkt P normalerweise auf die erste Zieltiefe zurückgeschaltet wird, es sei denn, dass zufällig zu diesem Zeitpunkt bzw. nach dieser Weglänge W der nächste Umschaltpunkte P liegt. Wie nämlich in Figur 5 zu erkennen ist, treten scheinbar Wegstrecken W mit der zweiten Zieltiefe sehr unterschiedlicher Länge auf. Dies ist darauf zurückzuführen, dass mehrere gleich lange elementare Wegstrecken W zufallsgesteuert im direkten Anschluss hintereinander auftreten können.

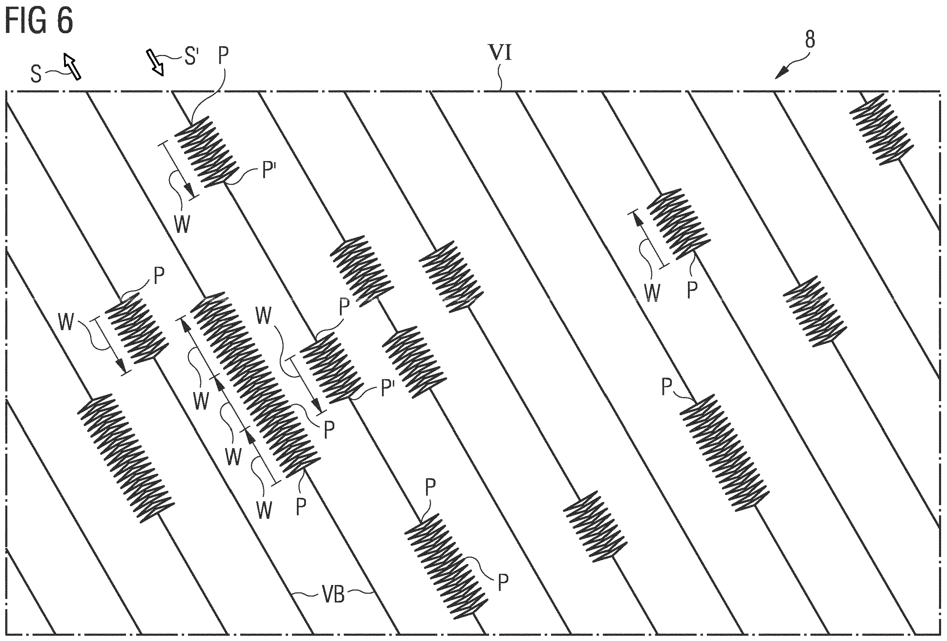

In Figur 6 ist ein weiter vergrößerter Ausschnitt VI des Baufelds 8 aus Figur 6 veranschaulicht. Hier ist deutlicher zu erkennen, dass die Wegstrecken W zwar immer dieselbe Länge aufweisen, aber zufallsgesteuert mehrere elementare Wegstrecken W aneinander anschließen können, wenn sich zum Ende einer ersten elementaren Wegstrecke W gleich eine zweite elementare Wegstrecke W anschließt. Wird zum Beispiel an einem Punkt P' eine Prozessierung mit einer erhöhten Zieltiefe beendet, so kann gleich im Anschluss erneut ein Umschaltpunkt P liegen, so dass zufällig hier mit der erhöhten zweiten Zieltiefe weitergearbeitet wird. Auf diese Weise können Hindernisse entstehen, die sich über mehrere Wegstrecken W erstrecken.

Die Abschnitte bzw. Wegstrecken W entlang der Hatches mit der zweiten Zieltiefe können wie oben beschrieben die effektiven Hindernisse für die Ausbreitung von Rissen bilden, da sie die Schichten untereinander gut verzahnen.

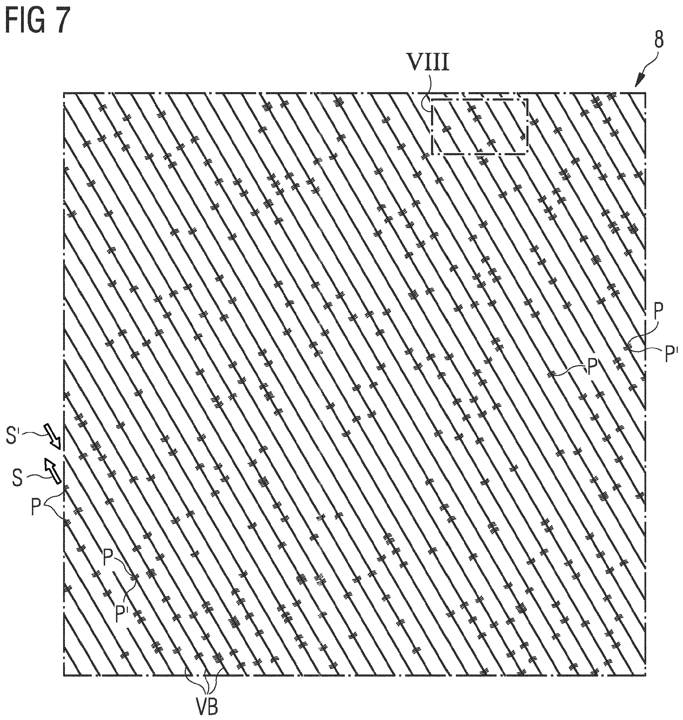

Um die Wirkung der Intensität I auf die Dichte der Umschaltpunkte P zu zeigen, wird zum Vergleich auf Figur 7 verwiesen, die analog zu Figur 5 eine schematische Draufsicht auf einen Ausschnitt eines Baufeld 8 mit Verfestigungsbahnen VB in Form von Hatches VB zeigt. Auch hier sind die Umschaltpunkte P, bei denen von der ersten Zieltiefe auf die tiefere zweite Zieltiefe umgeschaltet wird, auf den Hatches VB zufallsverteilt. Es wurde als Verteilungsfunktion, wie bei dem Ausführungsbeispiel nach Figur 5, eine Poisson-Verteilung gewählt, wobei bei dem Beispiel nach Figur 5 eine Intensität von 1500 vorgegeben wurde und bei dem Beispiel nach Figur 7 eine Intensität von 2500, d. h. die Umschaltpunkte P liegen bei der Variante nach Figur 7 dichter.

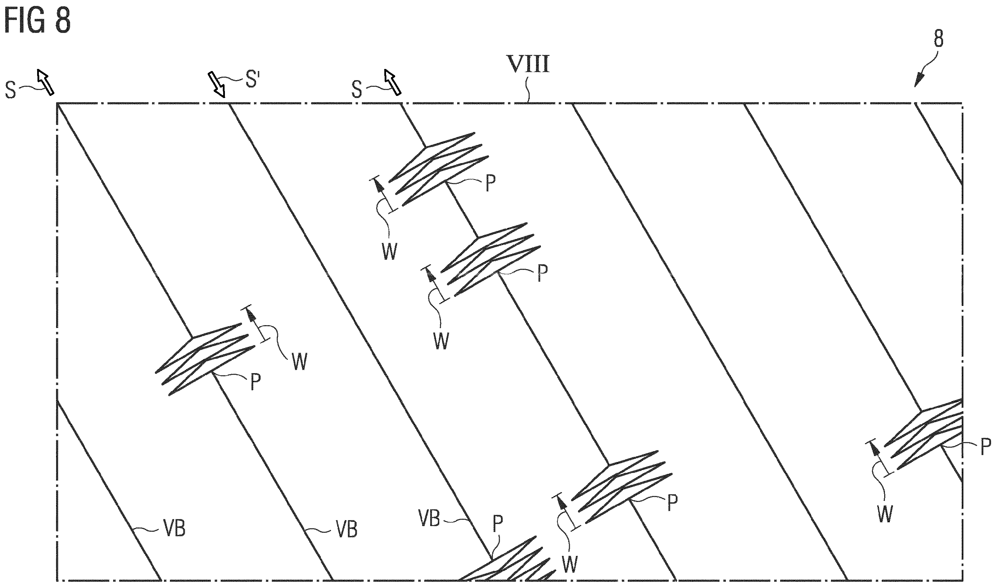

Bei dem in Figur 7 gezeigten Ausführungsbeispiel ist zudem die Wegstrecke W, nach der normalerweise von der zweiten Zieltiefe auf die erste Zieltiefe zurückgeschaltet wird, auf nur drei Mikrovektoren reduziert, d. h. die Hindernisse für Rissausbreitung sind zwar häufiger als in Figur 5, dafür aber kürzer. Figur 8 zeigt hierzu einen vergrößerten Ausschnitt VIII eines Teilbereichs des in Figur 7 gezeigten Baufelds 8. In dem Ausschnitt VIII ist zu erkennen, dass die Wegstrecken W mit erhöhter Verfestigungstiefe nur jeweils drei Mikrovektoren umfassen, aber auch direkt aneinander anschließen können.

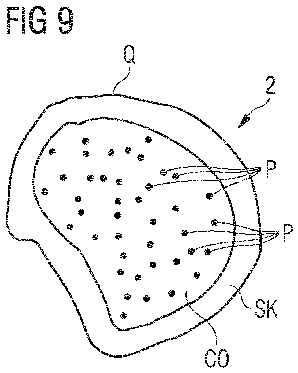

In Figur 9 ist schließlich eine Draufsicht auf einen Querschnitt Q eines Bauteils 2 mit einem Innenbereich CO (Core) und einem Außenbereich SK (Skin) gezeigt. In dem Innenbereich CO sind eine Vielzahl von zufallsgesteuert erzeugten Umschaltpunkten P als schwarze Punkte dargestellt. Es ist zu beachten, dass die Punkte P hier nur symbolisch dargestellt sind und in der Realität viel dichter liegen würden. In dem Außenbereich SK dagegen sind keinerlei Umschaltpunkte P vorhanden. Dieser Verteilung der Hindernisse nur im Innenbereich liegt die Beobachtung zugrunde, dass Hindernisse in einem Randbereich Eigenschaften der Oberfläche verschlechtern können. Außerdem könnten bei dieser Anordnung von Umschaltpunkten Risse, die relativ weit außen auftreten, gezielt zur Oberfläche geleitet werden, um sie dort sichtbar machen zu können und dadurch Defekte leichter erkennbar zu machen.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Zum Beispiel könnte eine Verfestigung anstatt mit Laserlicht auch mit anderen Energiestrahlen erfolgen. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren zusammenwirkenden Teil-Komponenten besteht, die gegebenenfalls auch räumlich verteilt sein können.

Bezugszeichenliste

1 Vorrichtung zur additiven Fertigung / Lasersintervorrichtung
2 Bauteil / Objekt
3 Prozessraum / Prozesskammer
4 Kammerwandung
5 Behälter
6 Behälterwandung
7 Arbeitsebene
8 Baufeld
10 Träger
11 Grundplatte
12 Bauplattform
13 Aufbaumaterial (im Behälter 5)
14 Vorratsbehälter
15 Aufbaumaterial (im Vorratsbehälter 14)
16 Beschichter
17 Strahlungsheizung
18 Sensoranordnung / Kamera
20 Bestrahlungsvorrichtung / Belichtungsvorrichtung
21 Laser
22 Auftrefffläche (des Laserstrahls)
23 Umlenkvorrichtung / Scanner
24 Fokussiereinrichtung
25 Einkoppelfenster
30 Strahlformungseinrichtung
50 Steuereinrichtung
51 Steuereinheit
52 Qualitätsdaten-Ermittlungseinrichtung
53 Bestrahlungssteuerschnittstelle
54, 54' Steuerdatenerzeugungsvorrichtung
55 Bus
56 Terminal
110 erstes Schaubild
120 zweites Schaubild
AL (Ausgangs-)Energiestrahl / Laserstrahl
BSD Steuerdaten / Belichtungssteuerdaten
CO Innenbereich / Core
D Düse
DS Düsensteuerdaten
EL Eingangs-Energiestrahl / Laserstrahl
FS Fokussteuerdaten
FS1, FS2 Teil-Formsteuersignale
H horizontale Richtung
HS Heizungssteuerdaten
K Umschaltkarte / Schweißtiefenkarte
LS Lasersteuerdaten
ON nominelle Oberfläche

P, P' Umschaltpunkt

PSD Prozesssteuerdaten

Q Querschnitt

QD Qualitätsdaten

S, S' Scanrichtung / Bewegungsrichtung der Auftrefffläche

SB Prozessraum-Sensordatensatz / Schichtbild

SD Scansteuerdaten

SK Außenbereich / Shell

ST Beschichtungssteuerdaten

SVF Sollverteilung

T Toleranzbereich

TI Ist-Einschweißtiefe

TS Soll-Einschweißtiefe

TSD Trägersteuerdaten

TS1, TS1", TS1‴ erste Solleinschweißtiefe / erste Zieltiefe

TS2, TS2", TS2‴ zweite Solleinschweißtiefe / zweite Zieltiefe

TT Schwankungsbreite

V vertikale Richtung

V1**, V1*, V1‴, V1", V1', V1 Mikrovektoren

V2, V2", V2‴ Mikrovektoren

VF Testfunktion

VSD Intensitätsverteilungssteuerdaten

VS Vektorspur

W Weglänge / Wegstrecke

Z Umschaltzeitpunkt

**Patentansprüche**

1. Verfahren zur Generierung von Steuerdaten (PSD, BSD) für eine Vorrichtung (1) zur additiven Fertigung eines Bauteils (2) in einem Fertigungsprozess, in welchem in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial dadurch erfolgt, dass eine Bestrahlung des Aufbaumaterials (13) mit zumindest einem Energiestrahl (AL) erfolgt,

   wobei die Steuerdaten (PSD, BSD) derart erstellt werden, dass die Vorrichtung (1) zur additiven Fertigung so angesteuert wird,
   dass der Energiestrahl (AL) entlang einer Anzahl von Verfestigungsbahnen (VB) über das Baufeld (8) bewegt wird, **dadurch gekennzeichnet, dass** zumindest zeitweise der Betrieb in einem Verzahnungsmodus erfolgt, in dem bei der Bewegung des Energiestrahls (AL) über das Baufeld (8) an mehreren Umschaltpunkten (P), welche unter Nutzung einer vorgegebenen Wahrscheinlichkeitsverteilung über zumindest einen definierten Bereich (CO) eines Querschnitts (Q) des Bauteils (2) in der jeweiligen Schicht zufällig verteilt sind, eine ortsabhängige Soll-Einschweißtiefe (TS, TS1, TS2, TS1", TS2", TS1‴, TS2‴) des Energiestrahls umgeschaltet wird.

2. Verfahren gemäß Anspruch 1, wobei für eine Änderung der Soll-Einschweißtiefe (TS, TS1, TS2, TS1", TS2", TS1‴, TS2‴) an einem Umschaltpunkt (P) zumindest einer der folgenden Parameter gezielt geändert wird:

   - die Energiestrahlleistung;
   - die Intensitätsverteilung im Energiestrahl (AL),
   - die Fokuseinstellung,
   - die Scangeschwindigkeit,
   - die lokale Zuführung eines Gases oder einer Gasmischung zum Baufeld (8).

3. Verfahren gemäß Anspruch 1 oder 2, wobei an einem Umschaltpunkt (P) zwischen zumindest zwei verschiedenen definierten ortsabhängigen Soll-Einschweißtiefen (TS, TS1, TS2, TS1", TS2", TS1‴, TS2‴) gewechselt wird, und/oder wobei an einem Umschaltpunkt (P, P') eine neue ortsabhängige Soll-Einschweißtiefe (TS, TS1, TS2, TS1", TS2", TS1‴, TS2‴) in Abhängigkeit von einer Zufallszahl gewählt wird.

4. Verfahren gemäß einem der vorstehenden Ansprüche, wobei nach einem Wechsel von einer ersten ortsabhängigen Soll-Einschweißtiefe (TS1, TS1", TS1‴) auf eine zweite ortsabhängige Soll-Einschweißtiefe (TS2, TS2", TS2‴) an einem Umschaltpunkt (P) im weiteren Verlauf entlang der Verfestigungsbahn (VB) eine Rückschaltung auf die erste ortsabhängige Soll-Einschweißtiefe (TS1, TS1", TS1‴) oder eine Umschaltung auf eine andere ortsabhängige Soll-Einschweißtiefe

- nach einer definierten Zeitspanne und/oder nach einer definierten weiteren Wegstrecke (W)
oder
- an einem nachfolgenden Umschaltpunkt entlang der Wegstrecke erfolgt,

und/oder wobei eine mittlere Einschweißtiefen-Umschaltfrequenz höher als eine im Fertigungsprozess zu erwartende Frequenz von unbeabsichtigten Schwankungen in der Einschweißtiefe ist.

5. Verfahren gemäß einem der vorstehenden Ansprüche, wobei eine Tiefendifferenz zwischen einer zweiten ortsabhängigen Soll-Einschweißtiefe (TS2, TS2", TS2‴) und einer ersten ortsabhängigen Soll-Einschweißtiefe (TS1, TS1", TS1‴) zumindest bereichsweise unabhängig von der ersten ortsabhängigen Soll-Einschweißtiefe (TS1, TS1", TS1‴) gewählt wird.

6. Verfahren gemäß einem der vorstehenden Ansprüche, wobei eine Tiefendifferenz zwischen einer ersten ortsabhängigen Soll-Einschweißtiefe (TS1, TS1", TS1‴) und einer zweiten ortsabhängigen Soll-Einschweißtiefe (TS2, TS2", TS2‴) mindestens den Wert einer nominellen Schichtdicke, vorzugsweise mindestens den doppelten Wert einer nominellen Schichtdicke (DN), besonders bevorzugt den dreifachen Wert einer nominellen Schichtdicke (DN) beträgt,
wobei sich vorzugsweise zumindest eine erste ortsabhängige Soll-Einschweißtiefe (TS1) über das Fünffache einer nominellen Schichtdicke (DN) erstreckt und sich zumindest eine zweite ortsabhängige Soll-Einschweißtiefe (TS2) mindestens über das Siebenfache einer nominellen Schichtdicke (DN) erstreckt.

7. Verfahren gemäß einem der vorstehenden Ansprüche, wobei in vorbestimmten Arbeitsbereichen (SK) des Bauteils (2) eine Dichte der Verzahnungsstellen im Verzahnungsmodus erhöht wird oder reduziert wird oder der Verzahnungsmodus deaktiviert wird.

8. Verfahren gemäß einem der vorstehenden Ansprüche, wobei die Vorrichtung (1) zur additiven Fertigung so angesteuert wird, dass zumindest zeitweise ein Wärmeleitungsschweißprozess und zumindest zeitweise ein Tiefschweißprozess genutzt wird,

wobei vorzugsweise von einem Wärmeleitungsschweißprozess zeitweise in einen Tiefschweißprozess umgeschaltet wird,
und/oder
wobei zeitweise eine Überlagerung einer Wärmeleitungsschweißbahn durch eine Tiefschweißbahn erfolgt.

9. Verfahren gemäß einem der vorstehenden Ansprüche, wobei für jede Materialschicht eine Schweißtiefenkarte (K) festgelegt wird, welche zumindest die Umschaltpunkte (P) umfasst, und dabei vorzugsweise angibt, an welchem Ort innerhalb eines Querschnitts (Q) des Bauteils (2) in der jeweiligen Schicht auf dem Baufeld (8) bei der Bestrahlung der betreffenden Materialschicht welche ortsabhängige Soll-Einschweißtiefe (TS, TS1, TS2, TS1", TS2", TS1‴, TS2‴) einzustellen ist.

10. Verfahren gemäß Anspruch 9, wobei eine Verteilung der Umschaltpunkte (P) in der Schweißtiefenkarte (K) hinsichtlich eines Qualitätskriteriums, vorzugsweise hinsichtlich einer Soll-Verteilungsfunktion (SVF) geprüft wird, und wobei vorzugsweise, wenn das Qualitätskriterium nicht erfüllt ist, eine neue oder geänderte Schweißtiefenkarte (K) festgelegt wird.

11. Verfahren zur additiven Fertigung eines Bauteils (2), wobei in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial (13) dadurch erfolgt, dass eine Bestrahlung des Aufbaumaterials (13) mit zumindest einem Energiestrahl (AL) erfolgt,
wobei der Energiestrahl (AL) entlang einer Anzahl von Verfestigungsbahnen (VB) über das Baufeld (8) bewegt wird, und dabei zumindest zeitweise der Betrieb in einem Verzahnungsmodus erfolgt, in dem bei der Bewegung des Energiestrahls (AL) über das Baufeld (8) an mehreren Umschaltpunkten (P), welche unter Nutzung einer vorgegebenen Wahrscheinlichkeitsverteilung über zumindest einen definierten Bereich (CO) eines Querschnitts (Q) des Bauteils (2) in der jeweiligen Schicht zufällig verteilt sind, eine ortsabhängige Soll-Einschweißtiefe (TS) des Energiestrahls (AL) geändert wird.

12. Steuerdatenerzeugungsvorrichtung (54, 54') zur Generierung von Steuerdaten (PSD, BSD) für eine Vorrichtung (1) zur additiven Fertigung eines Bauteils (2) in einem Fertigungsprozess, in welchem in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial (13) dadurch erfolgt, dass eine Bestrahlung des Aufbaumaterials (13) mit zumindest einem Energiestrahl (AL) erfolgt,

wobei die Steuerdatenerzeugungsvorrichtung (54, 54') so ausgebildet ist, dass Steuerdaten (PSD, BSD) erstellt werden, mit denen die Vorrichtung (1) zur additiven Fertigung unter Nutzung der Steuerdaten (PSD, BSD) so ansteuerbar ist,
dass der Energiestrahl (AL) entlang einer Anzahl von Verfestigungsbahnen (VB) über das Baufeld (8) bewegt wird, und dabei zumindest zeitweise der Betrieb in einem Verzahnungsmodus erfolgt, in dem bei der Bewegung des Energiestrahls (AL) über das Baufeld (8) an mehreren Umschaltpunkten (P), welche unter Nutzung einer vorgegebenen Wahrscheinlichkeitsverteilung über zumindest einen definierten Bereich (CO) eines Querschnitts (Q) des Bauteils (2) in der jeweiligen Schicht zufällig verteilt sind, eine ortsabhängige Soll-Einschweißtiefe (TS, TS1, TS2, TS1", TS2", TS1‴, TS2‴) des Energiestrahls (AL) geändert wird.

13. Steuereinrichtung (50) für eine Vorrichtung (1) zur additiven Fertigung eines Bauteils (2) in einem Fertigungsprozess, in welchem in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial (13) dadurch erfolgt, dass eine Bestrahlung des Aufbaumaterials (13) mit zumindest einem Energiestrahl (AL) mittels einer Bestrahlungsvorrichtung (20) erfolgt,

wobei die Steuereinrichtung (50) ausgebildet ist, die Vorrichtung (1) zur additiven Fertigung der Bauteilschicht des Bauteils (2) so anzusteuern,
dass der Energiestrahl (AL) entlang einer Anzahl von Verfestigungsbahnen (VB) über das Baufeld (8) bewegt wird, und dabei zumindest zeitweise der Betrieb in einem Verzahnungsmodus erfolgt, in dem bei der Bewegung des Energiestrahls (AL) über das Baufeld (8) an mehreren Umschaltpunkten (P), welche unter Nutzung einer vorgegebenen Wahrscheinlichkeitsverteilung über zumindest einen definierten Bereich (CO) eines Querschnitts (Q) des Bauteils (2) in der jeweiligen Schicht zufällig verteilt sind, eine ortsabhängige Soll-Einschweißtiefe (TS, TS1, TS2, TS1", TS2", TS1‴, TS2‴) des Energiestrahls geändert wird,
wobei die Steuereinrichtung (50) vorzugsweise eine Steuerdatenerzeugungsvorrichtung (54) nach Anspruch 12 umfasst.

14. Vorrichtung (1) zur additiven Fertigung zumindest eines Bauteils (2) in einem additiven Fertigungsprozess mit zumindest

- einer Zuführvorrichtung zum Aufbringen von Materialschichten von Aufbaumaterial (13) in einem Baufeld in einen Prozessraum (3),
- einer Bestrahlungsvorrichtung (20), um zwischen dem Aufbringen zweier Materialschichten Aufbaumaterial (13) durch Bestrahlung mit zumindest einem Energiestrahl (AL) selektiv zu verfestigen, sowie
- einer Steuereinrichtung (50) nach Anspruch 13.

15. Computerprogrammprodukt mit einem Computerprogramm, welches direkt in eine Speichereinrichtung einer Steuerdatenerzeugungsvorrichtung (54, 54') und/oder einer Steuereinrichtung (50) einer Vorrichtung (1) zur additiven Fertigung einer Bauteilschicht eines Bauteils (2) ladbar ist, mit Programmabschnitten, um alle Schritte des Verfahrens nach einem der Ansprüche 1 bis 11 auszuführen, wenn das Computerprogramm in der Steuerdatenerzeugungsvorrichtung (54, 54') und/oder Steuereinrichtung (50) ausgeführt wird.

16. Steuerdaten (PSD, BSD) zur Steuerung einer Vorrichtung (1) zur additiven Fertigung, welche Steuerdaten (PSD, BSD) so ausgebildet sind, dass sie die Vorrichtung (1) zur additiven Fertigung derart ansteuern, dass eine Fertigung eines Bauteils (2) unter Nutzung eines Verfahrens nach Anspruch 11 erfolgt, und/oder wobei die Steuerdaten (PSD, BSD) mit einem Verfahren nach einem der Ansprüche 1 bis 10 erstellt wurden.

**Claims**

1. Method for generating control data (PSD, BSD) for a device (1) for additively manufacturing a component (2) in a manufacturing process, in which method construction material (13), preferably comprising a metal powder, is built up in layers in a construction field (8), and in each case a selective solidification of construction material takes place between the application of two material layers of construction material (13) whereby the construction material (13) is exposed to at least one energy beam (AL),

   wherein the control data (PSD, BSD) are created in such a manner that the device (1) is controlled for additive manufacture in a way,
   that the energy beam (AL) is moved along a number of solidification paths (VB) across the construction field (8) **characterized in that** the operation takes place at least temporarily in an interlocking mode in which, when the energy beam (AL) is moved across the construction field (8) a location-dependent target welding penetration depth (TS, TS1, TS2, TS1", TS2", TS1‴, TS2‴) of the energy beam is switched at a plurality of switching points (P) which are randomly distributed over at least one defined region (CO) of a cross-section (Q) of the component (2) in the respective layer using a predefined probability distribution.

2. Method according to Claim 1, wherein for a change of the target welding penetration depth (TS, TS1, TS2, TS1", TS2", TS1‴, TS2‴) at a switching point (P) at least one of the following parameters is specifically varied:

   - the energy beam power;
   - the intensity distribution in the energy beam (AL),
   - the focus setting,
   - the scan speed,
   - the local supply of a gas or a gas mixture to the construction field (8).

3. Method according to Claims 1 or 2, wherein at a switching point (P) a switching is made between two different defined location-dependent target welding penetration depths (TS, TS1, TS2, TS1", TS2", TS1‴, TS2‴), and/or wherein at a switching point (P, P') a new location-dependent target welding penetration depth (TS, TS1, TS2, TS1", TS2", TS1‴, TS2‴) is selected depending on a random number.

4. Method according to one of the preceding claims, wherein after a switching from a first location-dependent target welding penetration depth (TS1, TS1", TS1‴) to a second location-dependent target welding penetration depth (TS2, TS2", TS2‴) at a switching point (P) in the further course along the solidification path (VB) a switching back to the first location-dependent target welding penetration depth (TS1, TS1", TS1‴) or a switching to another location-dependent target welding penetration depth take place

   - after a defined time interval and/or after a defined further path distance (W)
   or
   - at a subsequent switching point along the path distance

   and/or wherein an average welding penetration depth switching frequency is higher than a frequency of unintentional fluctuations in the welding penetration depth to be expected in the manufacturing process.

5. Method according to one of the preceding claims, wherein a depth distance between a second location-dependent target welding penetration depth (TS2, TS2", TS2‴) and a first location-dependent target welding penetration depth (TS1, TS1", TS1‴) is selected independently of the first location-dependent target welding penetration depth (TS1, TS1", TS1‴) at least in some regions.

6. Method according to one of the preceding claims, wherein a depth difference between a first location-dependent target welding penetration depth (TS1, TS1", TS1‴) and a second location-dependent target welding penetration depth (TS2, TS2", TS2‴) is at least the value of a nominal layer thickness, preferably at least twice the value of a nominal layer thickness (DN), particularly preferably three times a nominal layer thickness (DN), wherein preferably at least one location-dependent target welding penetration depth (TS1) extends over five times a nominal layer thickness (DN) and at least one location-dependent target welding penetration depth (TS2) extends over at least seven times a nominal layer thickness (DN).

7. Method according to one of the preceding claims, wherein in predetermined working areas (SK) of the component (2) a density of the interlocking points in the interlocking mode is increased or reduced or the interlocking mode is deactivated.

8. Method according to one of the preceding claims, wherein the device (1) for additive manufacture is controlled so that at least temporarily a heat conduction welding process is used and at least temporarily a deep welding process is used, wherein preferably a switching from a heat conduction welding process to a deep welding process takes place temporarily
and/or
wherein temporarily a heat conduction welding path is temporarily superimposed with a deep welding path.

9. Method according to one of the preceding claims, wherein a welding-depth-map (K) is specified for each material layer, which comprises at least the switching points (P) and at the same time preferably specifies at which location within a cross-section (Q) of the component (2) in the respective layer on the construction field (8) which location-dependent target welding penetration depth (TS, TS1, TS2, TS1", TS2", TS1‴, TS2‴) should be set during irradiation of the relevant material layer.

10. Method according to Claim 9, wherein a distribution of the switching points (P) in the welding-depth-map (K) is checked with regard to a quality criterion, preferably with regard to a target distribution function (SVF),
and wherein preferably when the quality criterion is not satisfied, a new or amended welding-depth-map (K) is specified.

11. Method for additive manufacture of a component (2), wherein construction material (13), preferably comprising a metal powder, is build up in layers in a construction field (8) and in each case a selective solidification of construction material (13) is accomplished between the application of two material layers of construction material (13) whereby the construction material (13) is irradiated by at least one energy beam (AL),
wherein the energy beam (AL) is moved along a plurality of solidification paths (VB) across the construction field (8) and the operation takes place at least temporarily in an interlocking mode in which, when the energy beam (AL) is being moved across the construction field (8), a location-dependent target welding penetration depth (TS) of the energy beam (AL) is changed at a plurality of switching points (P) which are randomly distributed using a predefined probability distribution over at least one defined region (CO) of a cross-section (Q) of the component (2) in the respective layer.

12. Control data generating device (54, 54') for generating control data (PSD, BSD) for a device (1) for additively manufacturing a component (2) in a manufacturing process in which construction material (13), preferably comprising a metal powder, is built up in layers in a construction field (8) and in each case a selective solidification of two material layers of construction material (13) takes place between the application of two material layers of construction material (13) whereby the construction material (13) is exposed to at least one energy beam (AL),

wherein the control data generating device (54, 54') is configured so that control data (PSD, BSD) are created by means of which the device (1) for additive manufacture can be controlled using the control data (PSD, BSD) in a way
that the energy beam (AL) is moved along a plurality of solidification paths (VB) across the construction field (8) and at the same time operation takes place at least temporarily in an interlocking mode in which, when the energy beam (AL) is moved across the construction field (8), a location-dependent target welding penetration depth (TS, TS1, TS2, TS1", TS2", TS1‴, TS2‴) of the energy beam (AL) is changed at a plurality of switching points (P) which are randomly distributed over at least a defined region (CO) of a cross-section (Q) of the component (2) in the respective layer using a predefined probability distribution.

13. Control device (50) for a device (1) for additive manufacture of a component (2) in a manufacturing process in which construction material (13), preferably comprising a metal powder, is built up in layers in a construction field (8) and in each case a selective solidification of two material layers of construction material (13) takes place between the application of two material layers of construction material (13) whereby the construction material (13) is exposed to at least one energy beam (AL) by means of an irradiation device (20),

wherein the control device (50) is configured to control the device (1) for additive manufacture of the component layer of the component (2) in a way
that the energy beam (AL) is moved along a plurality of solidification paths (VB) across the construction field (8) and at the same time operation takes place at least temporarily in an interlocking mode in which, when the energy beam (AL) is moved across the construction field (8), a location-dependent target welding penetration depth (TS, TS1, TS2, TS1", TS2", TS1‴, TS2‴) of the energy beam (AL) is changed at a plurality of switching points (P) which are randomly distributed over at least a defined region (CO) of a cross-section (Q) of the component (2) in the respective layer using a predefined probability distribution,

wherein the control device (50) preferably comprises a control data generating device (54) according to Claim 12.

14. Device (1) for additive manufacture of at least one component (2) in an additive manufacturing process comprising at least

- one feed device for applying material layers of construction material (13) in a construction field in a process chamber (3),
- an irradiation device (20) to selectively solidify construction material (13) between the application of two material layers by irradiation with at least one energy beam (AL),
as well as
- a control device (50) according to Claim 13.

15. Computer program product with a computer program, which can be loaded directly into a storage device of a control data generating device (54, 54') and/or a control device (50) of a device (1) for additive manufacture of a component layer of a component (2) having program sections to execute all the steps of the method according to one of Claims 1 to 11, when the computer program is executed in the control data generating device (54, 54') and/or control device (50).

16. Control data (PSD, BSD) for controlling a device (1) for additive manufacture, which control data (PSD, BSD) are configured so that they control the device (1) for additive manufacture in such a manner that a component (2) is manufactured using a method according to Claim 11 and/or wherein the control data (PSD, BSD) were created using a method according to one of Claims 1 to 10.

**Revendications**

1. Procédé de génération de données de commande (PSD, BSD) pour un dispositif (1) de fabrication additive d'un composant (2) dans un processus de fabrication, dans lequel du matériau de construction(13), comprenant de préférence une poudre métallique, est déposé en couches dans un champ de construction (8), et une solidification sélective du matériau de construction (13) a lieu respectivement entre l'application des deux couches de matériau de matériau de construction (13) par le fait qu'une irradiation du matériau de construction (13) a lieu avec au moins un faisceau d'énergie (AL),

sachant que les données de commande (PSD, BSD) sont établies de telle manière que le dispositif (1) de fabrication additive est activé de telle sorte que le faisceau d'énergie (AL) est déplacé le long d'un nombre de bandes de solidification (VB) sur le champ de construction (8), **caractérisé en ce qu'**au moins temporairement , le fonctionnement a lieu dans un mode d'engrènement dans lequel une profondeur de soudage théorique en fonction de l'emplacement (TS, TS1, TS2, TS1", TS2", TS1‴, TS2‴) du faisceau d'énergie est inversée, lors du déplacement du faisceau d'énergie (AL) sur le champ de construction (8), à plusieurs points d'inversion (P), lesquels sont répartis de façon fortuite dans la couche respective en utilisant une répartition de probabilité prédéfinie sur au moins une zone définie (CO) d'une section (Q) du composant (2).

2. Procédé selon la revendication 1, sachant que pour une modification de la profondeur de soudage théorique (TS, TS1, TS2, TS1", TS2", TS1‴, TS2‴) à un point d'inversion (P) au moins un des paramètres suivants est modifié de manière précise:

- la puissance de faisceau d'énergie,
- la répartition d'intensité dans le faisceau d'énergie (AL),
- le réglage de focalisation,
- la vitesse de balayage,
- l'apport local d'un gaz ou d'un mélange gazeux au champ de construction (8).

3. Procédé selon la revendication 1 ou 2, sachant qu'à un point d'inversion (P), on alterne entre au moins deux profondeurs de soudage théoriques différentes définies en fonction de l'emplacement (TS, TS1, TS2, TS1", TS2", TS1‴, TS2‴),
et/ou sachant qu'à un point d'inversion (P, P'), une nouvelle profondeur de soudage théorique en fonction de l'emplacement (TS, TS1, TS2, TS1", TS2", TS1‴, TS2‴) est choisie en fonction d'un nombre aléatoire.

4. Procédé selon l'une quelconque des revendications précédentes, sachant qu'après un changement d'une première profondeur de soudage théorique en fonction de l'emplacement (TS1, TS1", TS1‴) pour une deuxième profondeur de soudage théorique en fonction de l'emplacement (TS2, TS2", TS2‴), il se produit à un point d'inversion (P) dans la suite du développement le long de la bandes de solidification (VB), une rétrogradation à la première profondeur de soudage théorique en fonction de l'emplacement (TS1, TS1", TS1‴) ou une inversion à une autre profondeur de soudage théorique en fonction du lieu,

- selon une marge de temps définie et/ou selon une autre distance de parcours définie (W)
ou
- à un point d'inversion suivant le long de la distance de parcours,

et/ou sachant qu'une fréquence d'inversion moyenne de profondeur de soudage est plus élevée qu'une fréquence attendue dans le processus de fabrication de fluctuations involontaires dans la profondeur de soudage.

5. Procédé selon l'une quelconque des revendications précédentes, sachant qu'une différence de profondeur est choisie entre une deuxième profondeur de soudage théorique en fonction de l'emplacement (TS2, TS2", TS2‴) et une première profondeur de soudage théorique en fonction de l'emplacement (TS1, TS1", TS1‴), au moins par endroits indépendamment de la première profondeur de soudage théorique en fonction de l'emplacement (TS1, TS1", TS1‴).

6. Procédé selon l'une quelconque des revendications précédentes, sachant qu'une différence de profondeur entre une première profondeur de soudage théorique en fonction de l'emplacement (TS1, TS1", TS1‴) et une deuxième profondeur de soudage théorique en fonction de l'emplacement (TS2, TS2", TS2‴) est au moins la valeur d'une épaisseur de couche nominale, de préférence au moins la valeur double d'une épaisseur de couche nominale (DN), en particulier de préférence la valeur triple d'une épaisseur de couche nominale (DN),
sachant de préférence qu'au moins une première profondeur de soudage théorique en fonction de l'emplacement (TS1) s'étend sur cinq fois une épaisseur de couche nominale (DN) et qu'au moins une deuxième profondeur de soudage théorique en fonction de l'emplacement (TS2) s'étend au moins sur sept fois une épaisseur d'une couche nominale (DN).

7. Procédé selon l'une quelconque des revendications précédentes, sachant que dans les zones de travail prédéterminées (SK) du composant (2), une densité de points d'engrènement en mode d'engrènement est augmentée ou réduite ou le mode d'engrènement est désactivé.

8. Procédé selon l'une quelconque des revendications précédentes, sachant que le dispositif (1) de fabrication additive est activé de telle manière qu'on utilise au moins temporairement un processus de soudage par thermoconduction et au moins temporairement un processus de soudage à pénétration profonde,

sachant que l'on passe de préférence d'un processus de soudage par thermoconduction temporairement à un processus de soudage à pénétration profonde,
et/ou
sachant que parfois une superposition d'un cordon de soudure par un cordon de soudure profonde a lieu.

9. Procédé selon l'une quelconque des revendications précédentes, sachant que pour chaque couche de matériau, une carte de profondeur de soudure (K) est définie, laquelle comprend au moins les points d'inversion (P) et indique de préférence à cet effet à quel endroit quelle profondeur de soudage théorique en fonction de l'emplacement (TS, TS1, TS2, TS1", TS2", TS1‴, TS2‴) doit être réglée à l'intérieur d'une section (Q) du composant (2) dans la couche respective sur le champ de construction (8) lors de l'irradiation de la couche de matériau correspondant.

10. Procédé selon la revendication 9, sachant qu'une répartition des points d'inversion (P) est vérifiée dans la carte de profondeur de soudure (K) concernant un critère de qualité, de préférence concernant une fonction de répartition théorique (SVF),
et sachant de préférence que lorsque le critère de qualité n'est pas satisfait, une carte de profondeur de soudure (K) nouvelle ou modifiée est définie.

**EP 4 196 856 B1**

11. Procédé de fabrication additive d'un composant (2), sachant que dans un champ de construction (8), du matériau de construction (13), comprenant de préférence une poudre métallique, est constitué en couches et une solidification sélective du matériau de construction (13) a lieu respectivement entre l'application des deux couches de matériau de matériau de construction (13), par le fait qu'une irradiation du matériau de construction (13) a lieu avec au moins un faisceau d'énergie (AL),

sachant que le faisceau d'énergie (AL) est déplacé le long d'un nombre de bandes de solidification (VB) sur le champ de construction (8) et le fonctionnement a lieu à cet effet au moins temporairement dans un mode d'engrènement, dans lequel une profondeur de soudage théorique en fonction de l'emplacement (TS) du faisceau d'énergie (AL) est modifiée lors du déplacement du faisceau d'énergie (AL) sur le champ de construction (8) à plusieurs points d'inversion (P), lesquels sont répartis de façon fortuite dans la couche respective en utilisant une répartition de probabilité prédéfinie sur au moins une zone définie (CO) d'une section (Q) du composant (2).

12. Dispositif de production de données de commande (54, 54') pour la génération de données de commande (PSD, BSD) pour un dispositif (1) de fabrication additive d'un composant (2) dans un processus de fabrication, dans lequel du matériau de construction (13), comprenant de préférence une poudre métallique, est déposé en couches dans un champ de construction (8) et une solidificationsélective du matériau de construction (13) a lieu respectivement entre l'application de deux couches de matériau de matériau de construction (13) par le fait qu'une irradiation du matériau de construction (13) a lieu avec au moins un faisceau d'énergie (AL),

sachant que le dispositif de production de données de commande (54, 54') est constitué de telle manière que des données de commande (PSD, BSD) sont établies, avec lesquelles le dispositif (1) de fabrication additive peut être activé en utilisant les données de commande (PSD, BSD) de telle sorte, que le faisceau d'énergie (AL) est déplacé le long d'un nombre de bandes de solidification (VB) sur le champ de construction (8) et le fonctionnement a lieu à cet effet au moins temporairement dans un mode d'engrènement, dans lequel une profondeur de soudage théorique en fonction de l'emplacement (TS, TS1, TS2, TS1", TS2", TS1‴, TS2‴) du faisceau d'énergie (AL) est modifiée lors du déplacement du faisceau d'énergie (AL) sur le champ de construction (8), à plusieurs points d'inversion (P), lesquels sont répartis de façon fortuite dans la couche respective en utilisant une répartition de probabilité prédéfinie sur au moins une zone définie (CO) d'une section (Q) du composant (2).

13. Système de commande (50) pour un dispositif (1) de fabrication additive d'un composant (2) dans un processus de fabrication, dans lequel du matériau de construction (13) comprenant préférence une poudre métallique, est déposé en couches dans un champ de construction (8) et une solidification sélective du matériau de construction (13) a lieu respectivement entre l'application de deux couches de matériau de matériau de construction (13) par le fait qu'une irradiation du matériau de construction (13) a lieu avec au moins un faisceau d'énergie (AL) au moyen d'un dispositif d'irradiation (20),

sachant que le système de commande (50) est constitué pour activer le dispositif (1) de fabrication additive de la couche de composant du composant (2) de telle sorte que le faisceau d'énergie (AL) est déplacé le long d'un nombre de bandes de solidification (VB) sur le champ de construction (8) et le fonctionnement a lieu à cet effet au moins temporairement dans un mode d'engrènement, dans lequel une profondeur de soudage théorique en fonction de l'emplacement (TS, TS1, TS2, TS1", TS2", TS1‴, TS2‴) du faisceau d'énergie est modifiée lors du déplacement du faisceau d'énergie (AL) sur le champ de construction (8), à plusieurs points d'inversion (P), lesquels sont répartis de façon fortuite dans la couche respective en utilisant une répartition de probabilité prédéfinie sur au moins une zone définie (CO) d'une section (Q) du composant (2), sachant que le système de commande (50) comprend de préférence un dispositif de production de données de commande (54) selon la revendication 12.

14. Dispositif (1) de fabrication additive d'au moins un composant (2) dans un processus de fabrication additif avec au moins

- un dispositif d'alimentation pour appliquer des couches de matériau de matériau de construction (13) dans un champ de construction dans un chambre de processus (3),
- un dispositif d'irradiation (20), pour solidifier de façon sélective le matériau de construction (13) entre l'application de deux couches de matériau par irradiation avec au moins un faisceau d'énergie (AL), ainsi qu'
- un système de commande (50) selon la revendication 13.

**15.** Produit logiciel comprenantun programme informatique, lequel peut être directement chargé dans un système de mémorisation d'un dispositif de production de données de commande (54, 54') et/ou un système de commande (50) d'un dispositif (1) de fabrication additive d'une couche de composant d'un composant (2), avec des sections de programme pour exécuter toutes les étapes du procédé selon l'une quelconque des revendications 1 à 11, lorsque le programme informatique est exécuté dans le dispositif de production de données de commande (54, 54') et/ou le système de commande (50).

**16.** Données de commande (PSD, BSD) pour la commande d'un dispositif (1) pour la fabrication additive, lesquelles données de commande (PSD, BSD) sont constituées de telle manière qu'elles commandent le dispositif (1) pour la fabrication additive de telle façon qu'une fabrication d'un composant (2) a lieu en utilisant un procédé selon la revendication 11 et/ou sachant que les données de commande (PSD, BSD) ont été établies avec un procédé selon l'une quelconque des revendications 1 à 10.

# FIG 1

# FIG 2 Stand der Technik

V1**V1*V1'''V1'' V1' V1 V1 V1 V1 V1 V1 V1 V1 V1 V1 V1 ON

VS

TS1''

TS1

TT

TI

V1 V1 V1 V1 V1 V1 V1 V1 V1 V1 V1 V1 V1 V1 V1 V1 ON

VS

TS1

TI

V1 V1 V1 V1 V1 V1 V1 V1 V1 V1 V1' V1'' V1''' V1* V1** ON

VS

TS1''

TS1

TI

## FIG 3

# FIG 4

V1✶✶ V1✶ V2‴ V2″ V1′ V1 V1 V1 V1 V1 V1 V1 V1 V1 V1 V1 ▸ ON

VS

TS1‴

TS2‴

TS1

TI

VS V1 V1 V1 V1 V1 V1 V1 V2 V2 V2 V2 V2 V2 V1 V1 V1 ▸ ON

P P′

TS2

TS1

DN

TI

V1 V1 V1 V1 V1 V1 V1 V1 V1 V1 V1′ V2″ V2‴ V1✶ V1✶✶ ▸ ON

VS

P′ P

TS1″ TS2″

TS1

TI

FIG 5

FIG 6

EP 4 196 856 B1

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5182055 A

- EP 3482853 A1